# EUROPÄISCHE PATENTSCHRIFT

(11) **EP 2 349 556 B1**
(45) Veröffentlichungstag und Bekanntmachung des Hinweises auf die Patenterteilung: **10.08.2016**
(21) Anmeldenummer: 09778509.1
(22) Anmeldetag: 14.09.2009
(51) Int. Cl.: B01J 20/28, B01D 53/02, B01D 53/04, C02F 1/28, C01B 3/00, B82Y 30/00, F17C 11/00

(54) **ADSORPTIVE FORMKÖRPER UND IHRE VERWENDUNG**
ADSORPTIVE MOLDED PARTS AND THE USE THEREOF
CORPS MOULÉ ADSORBANT ET SON UTILISATION

(30) Priorität: 14.11.2008 DE 102008057475; 15.11.2008 DE 102008057509; 19.11.2008 DE 102008058248
(43) Veröffentlichungstag der Anmeldung: 03.08.2011
(73) Patentinhaber: Blücher GmbH, 40699 Erkrath (DE)
(72) Erfinder: VON BLÜCHER, Hasso, 40699 Erkrath (DE); BÖHRINGER, Bertram, 42115 Wuppertal (DE); FICHTNER, Sven, 14776 Brandenburg (DE); GIEBELHAUSEN, Jann-Michael, 14712 Rathenow (DE)
(74) Vertreter: Von Rohr Patentanwälte Partnerschaft mbB
(86) Internationale Anmeldenummer: PCT/EP2009/006635
(87) Internationale Veröffentlichungsnummer: WO 2010/054714

(56) Entgegenhaltungen:
- WO-A2-03/082436
- WO-A2-2010/054715
- DE-T2- 69 318 301
- DE-U1-202006 016 898
- US-A- 3 474 600
- US-A- 5 033 465
- US-A- 6 083 439
- US-A1- 2003 080 473

## Beschreibung

### Adsorptive Formkörper und ihre Verwendung

Die vorliegende Erfindung betrifft das Gebiet der Adsorptionsfiltertechnologie.

Insbesondere betrifft die vorliegende Erfindung adsorptive Formkörper, welche insbesondere ausgehend von adsorptiven Strukturen auf Basis von Agglomeraten von Adsorberpartikeln erhältlich sind, sowie ein Verfahren zu deren Herstellung und deren Verwendung.

Des weiteren betrifft die vorliegende Erfindung Filter, welche die erfindungsgemäßen adsorptiven Formkörper umfassen.

Zur Aufreinigung oder Aufbereitung von fluiden Medien, wie insbesondere Gasen, Gasströmen oder Gasgemischen, wie z. B. Luft, oder aber Flüssigkeiten, wie z. B. Wasser, kommen oft partikuläre Systeme auf Basis von Teilchen mit spezifischer Wirkung (z. B. Adsorbentien, Ionenaustauscher, Katalysatoren etc.) zum Einsatz. So ist beispielsweise die Verwendung von Adsorberpartikeln zur Entfernung von Gift- oder Schadstoffen und Gerüchen aus Gas- oder Luftströmen oder aber aus Flüssigkeiten aus dem Stand der Technik bekannt.

Die Verwendung loser Schüttungen der vorgenannten Teilchen, insbesondere in Form von sogenannten Schüttfiltern, ist dabei die zentrale Anwendungsform, um die betreffenden Partikel, wie z. B. Adsorberpartikel, mit dem betreffenden Gas oder der betreffenden Flüssigkeit in Kontakt zu bringen.

Da bei kleinen Partikeln, wie z. B. Adsorberpartikeln, eine größere Oberfläche zur Verfügung steht als bei größeren Partikeln, ist bei den kleineren Partikeln erwartungsgemäß die Wirkungsweise besser. Allerdings führen die kleinen Partikel in loser Schüttung zu einem hohen Druckverlust, und zudem wird durch die kleinen Partikel die Bildung von Kanälen gefördert, was eine gewisse Durchbruchgefahr mit sich bringt. Aus diesem Grund ist die bei Schüttungen verwendete Teilchengröße oftmals nur ein Kompromiß, so daß meist nicht die für die Anwendung optimalen Teilchengrößen zum Einsatz kommen können. Insbesondere kommen zu Zwecken der Erreichung wirtschaftlicher Betriebsbedingungen, insbesondere eines akzeptablen Druckverlustes, oftmals größere Partikel (z. B. Adsorberpartikel) zum Einsatz, als es für eine optimale Nutzung der Adsorptionseffizienz wünschenswert wäre, so daß oft ein beträchtlicher Teil der theoretisch vorhandenen Kapazität nicht genutzt werden kann.

Die US 3 474 600 A betrifft geformte Aktivkohleteilchen, wobei die Aktivkohleteilchen mit Hilfe eines thermoplastischen Monoolefinpolymers zu Pellets verbunden sind. Die Pellets werden in einer größeren Form über das Monoolefinpolymer an den Kontaktflächen der jeweiligen Pellets miteinander verbunden.

Aus der DE 38 13 564 A1 und aus der zu derselben Patentfamilie gehörenden EP 0 338 551 A2 ist eine Aktivkohlefilterschicht für Gasmasken bekannt, welche ein hochluftdurchlässiges, im wesentlichen formstabiles dreidimensionales Trägergerüst umfaßt, an welchem eine Schicht von körnigen, insbesondere kugelförmigen Aktivkohleteilchen eines Durchmessers von 0,1 bis 1 mm fixiert ist, wobei es sich bei dem Trägergerüst um ein Geflecht aus Drähten, Monofilamenten oder Stegen oder um einen großporigen retikulierten Polyurethanschaumstoff handeln kann. Nachteilig bei dem dort beschriebenen System ist die Tatsache, daß ein zusätzliches Trägermaterial benötigt wird, welches in einem relativ aufwendigen Bearbeitungsprozeß mit den betreffenden Partikeln beaufschlagt werden muß. Zudem beschränkt das einmal gewählte Trägergerüst dann die betreffende Anwendung.

Weiterhin ist aus der DE 42 39 520 A1 ein Hochleistungsfilter bekannt, welches aus einem dreidimensionalen Trägergerüst besteht, auf welchem mittels einer Haftmasse Adsorberteilchen fixiert sind, wobei das Trägergerüst durch einen thermisch stabilen und sehr hydrolysebeständigen Kunststoff ummantelt ist, der ca. 20 bis 500 %, bezogen auf den Träger, beträgt. Insbesondere handelt es sich bei dem Trägergerüst um einen großporigen retikulierten Polyurethanschaumstoff, welcher durch ein Silikonharz, Polypropylen, hydrolysefestes Polyurethan, ein Acrylat, einen Synthesekautschuk oder Fluorpolymere ummantelt ist. Der Herstellungsprozeß für diese Strukturen ist relativ aufwendig. Zudem erfordert die dort beschriebene Technologie das Vorhandensein eines zusätzlichen Trägers.

Des weiteren sind aus der DE 43 43 358 A1 Aktivkohle enthaltende poröse Körper bekannt, welche aus Platten und Agglomeraten aus vermahlener, in einer porösen SiO₂-Matrix eingebauten Aktivkohle bestehen. Insbesondere werden dort poröse Platten oder Körper mit adsorbierenden Eigenschaften beschrieben, bei denen Aktivkohlekörner oder Aktivkohlekügelchen bzw. Aktivkohle enthaltende Körner oder Kügelchen mit Hilfe einer Silikatlösung aneinander zum Haften gebracht sind und nachfolgend die Silikatbrücken in Silicagelbrücken umgewandelt und die Körper getrocknet sind. Nachteilig hierbei ist die festgelegte Geometrie dieser porösen Körper sowie deren mangelnde Flexibilität und Kompressibilität, infolge derer sie für Filterbedingungen unter mechanischer Belastung nicht geeignet sind. Weiterhin nachteilig ist, daß die aktivkohlehaltigen Partikel vollständig mit der Silikatlösung benetzt werden, so daß ein großer Teil der Kapazität dieser Partikel nicht mehr für adsorptive Prozesse zur Verfügung steht.

Gleichermaßen sind aus der DE 43 31 586 C2 Agglomerate aus Aktivkohle bekannt, bei denen Aktivkohleteilchen mit einem Durchmesser zwischen 0,1 bis 5 mm durch leichten Druck unter Erwärmung um ein etwa gleichgroßes Teilchen aus Pech angeordnet und zum Haften gebracht sind und nachfolgend das Pechteilchen durch Oxidation unschmelzbar gemacht und in Aktivkohle umgesetzt ist, so daß der freie Zwischenraum zwischen den Teilchen im Agglomerat eine Weite von mindestens 10 Vol. % der Teilchengröße aufweist. Nachteilig bei den dort beschriebenen Teilchen ist die relativ aufwendige, energiereiche Herstellung sowie die mangelnde Kompressibilität der erhaltenen Agglomerate. Infolge der Starrheit der Aktivkohleagglomerate ist eine Verwendung für Filteranwendungen unter mechanischer Belastung nicht vorgesehen. Auch ist infolge der mangelnden Kompressibilität eine Weiterverarbeitung zu Formkörpern unter Verpressung nicht möglich.

Gleiches trifft auch auf die porösen Körper mit adsorbierenden Eigenschaften gemäß der DE 42 38 142 A1 zu, welche Adsorberteilchen umfassen, die über Brücken aus anorganischem Material, insbesondere Tonerde, miteinander verbunden sind, wobei die Hohlräume zwischen den Adsorberteilchen 10 bis 100 % des Volumens der Adsorberteilchen ausmachen. Auch die dort beschriebenen porösen Körper weisen eine nur geringe Flexibilität und Kompressibilität auf, so daß eine Verwendung unter mechanischer Belastung und eine Weiterverarbeitung zu Formkörpern unter Verpressung ausgeschlossen ist.

Der vorliegenden Erfindung liegt daher die Aufgabe zugrunde, adsorptive Formkörper bereitzustellen, welche die zuvor geschilderten Nachteile des Standes der Technik zumindest weitgehend vermeiden oder aber wenigstens abschwächen.

Insbesondere ist eine Aufgabe der vorliegenden Erfindung darin zu sehen, adsorptive Formkörper bereitzustellen, welche die Nachteile herkömmlicher Schüttfilter auf Basis von einzelnen Partikeln vermeiden bzw. zumindest abschwächen und zudem insbesondere auch eine Verwendung unter mechanischer Belastung ermöglichen, insbesondere eine ausreichende Flexibilität und/oder Kompressibilität aufweisen.

Die zuvor geschilderte Aufgabenstellung wird vorschlagsgemäß - gemäß einem **ersten** Aspekt der vorliegenden Erfindung - durch den Gegenstand von Patentanspruch 1 gelöst, welcher einen erfindungsgemäßen adsorptiven Formkörper betrifft; weitere, vorteilhafte Weiterbildungen und Ausgestaltungen dieses Erfindungsaspekts sind Gegenstand der diesbezüglichen Unteransprüche.

Weiterer Gegenstand der vorliegenden Erfindung - gemäß einem **zweiten** Aspekt der vorliegenden Erfindung - ist das erfindungsgemäße Verfahren zur Herstellung dieses adsorptiven Formkörpers, wie es Gegenstand von Patentanspruch 11 ist; weitere, vorteilhafte Weiterbildungen und Ausgestaltungen dieses Erfindungsaspekts sind Gegenstand des diesbezüglichen Verfahrensunteranspruchs.

Des weiteren ist Gegenstand der vorliegenden Erfindung - gemäß einem **dritten** Aspekt der vorliegenden Erfindung - die erfindungsgemäße Verwendung der adsorptiven Formkörper nach der vorliegenden Erfindung, wie sie in den Patentansprüchen 13 und 14 definiert ist.

Schließlich ist Gegenstand der vorliegenden Erfindung - gemäß einem **vierten** Aspekt der vorliegenden Erfindung - ein erfindungsgemäßer Filter nach Patentanspruch 15, welcher einen adsorptiven Formkörper nach der vorliegenden Erfindung umfaßt; weitere, vorteilhafte Weiterbildungen und Ausgestaltungen dieses Erfindungsaspekts sind Gegenstand der diesbezüglichen Unteransprüche.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in bezug auf die übrigen Erfindungsaspekte entsprechend gelten.

Weiterhin versteht es sich von selbst, daß bei nachfolgenden Werte-, Zahlen- und Bereichsangaben die angegebenen Bereiche nicht beschränkend zu verstehen sind; es versteht sich für den Fachmann, daß einzelfallbedingt oder anwendungsbezogen von den angegebenen Bereichen und Angaben abgewichen werden kann, ohne daß der Rahmen der vorliegenden Erfindung verlassen ist.

Dies vorausgeschickt, wird im folgenden die vorliegende Erfindung näher beschrieben.

Gegenstand der vorliegenden Erfindung ist somit - gemäß einem **ersten** Aspekt der vorliegenden Erfindung - ein adsorptiver Formkörper, welcher aus einer Vielzahl adsorptiver Strukturen auf Basis von Agglomeraten von Adsorberpartikeln (d. h. also aus einer Vielzahl von Agglomeraten von Adsorberpartikeln) aufgebaut ist, wobei die einzelnen Agglomerate von Adsorberpartikeln der adsorptiven Strukturen jeweils eine Vielzahl von kornförmigen Adsorberpartikeln umfassen, wobei die Adsorberpartikel eines einzelnen Agglomerats über ein thermoplastisches organisches Polymer miteinander verbunden sind, wobei das organische Polymer mindestens einen Kern des jeweiligen Agglomerats bildet und wobei die Adsorberpartikel eines einzelnen Agglomerats jeweils an mindestens einem Kern aus organischem Polymer angeordnet und/oder angelagert sind, wobei das Größenverhältnis von Kern aus organischem Polymer zu einzelnem Adsorberpartikel mindestens 1,25 : 1 beträgt und wobei der Formkörper erhältlich ist durch Verpressen der adsorptiven Strukturen auf Basis von Agglomeraten von Adsorberpartikeln, wobei das Verpressen unter Erwärmen auf Temperaturen unterhalb der Schmelz- oder Erweichungstemperatur des organischen Polymers und unter gleichzeitiger Formgebung erfolgt.

Der erfindungsgemäße adsorptive Formkörper umfaßt eine Vielzahl von kornförmigen, vorzugsweise kugelförmigen Adsorberpartikeln. Dabei können die Adsorberpartikel zumindest teilweise über ein vorzugsweise thermoplastisches organisches Polymer, insbesondere Bindemittel, miteinander verbunden sein bzw. können die Adsorberpartikel zumindest teilweise an ein vorzugsweise thermoplastisches organisches Polymer, insbesondere Bindemittel, gebunden und/oder zum Haften gebracht sein.

Bevorzugterweise ist der erfindungsgemäße adsorptive Formkörper einstückig bzw. monolithisch ausgebildet.

Der erfindungsgemäße adsorptive Formkörper kann im übrigen beliebige geometrische bzw. dreidimensionale Formen aufweisen: So kann beispielsweise der erfindungsgemäße adsorptive Formkörper zylindrisch, stabförmig, tellerförmig, quaderförmig, polyedrisch oder dergleichen ausgebildet sein.

Der erfindungsgemäße adsorptive Formkörper weist einen ausgezeichneten Druckverlust auf. Insbesondere weist der erfindungsgemäße adsorptive Formkörper einen längenbezogenen Druckverlust bei einer Strömungsgeschwindigkeit von 0,2 m/s von höchstens 200 Pa/cm, insbesondere höchstens 150 Pa/cm, vorzugsweise höchstens 100 Pa/cm, besonders bevorzugt höchstens 90 Pa/cm, ganz besonders bevorzugt höchstens 70 Pa/cm, noch mehr bevorzugt höchstens 50 Pa/cm, auf.

Typischerweise weist der erfindungsgemäße adsorptive Formkörper einen längenbezogenen Druckverlust bei einer Strömungsgeschwindigkeit von 0,2 m/s im Bereich von 5 bis 200 Pa/cm, insbesondere 5 bis 150 Pa/cm, vorzugsweise 5 bis 100 Pa/cm, besonders bevorzugt 7,5 bis 90 Pa/cm, ganz besonders bevorzugt 10 bis 80 Pa/cm, auf.

Der erfindungsgemäße adsorptive Formkörper ist ausgehend von adsorptiven Strukturen auf Basis von Agglomeraten von Adsorberpartikeln (d. h. also ausgehend von Adsorberpartikelagglomeraten), insbesondere wie zuvor beschrieben und nachfolgend noch näher definiert, erhältlich, und zwar durch Verpressen dieser adsorptiven Strukturen bzw. Adsorberpartikelagglomerate.

Was die erfindungsgemäß zur Herstellung des adsorptiven Formkörpers nach der vorliegenden Erfindung eingesetzten adsorptiven Strukturen auf Basis von Agglomeraten von Adsorberpartikeln anbelangt, so umfassen die einzelnen Agglomerate jeweils eine Vielzahl von kornförmigen, vorzugsweise kugelförmigen Adsorberpartikeln. Die adsorptiven Strukturen zeichnen sich dabei dadurch aus, daß die Adsorberpartikel eines einzelnen Agglomerats über ein thermoplastisches organisches Polymer, insbesondere Bindemittel, miteinander verbunden sind und/oder daß die Adsorberpartikel eines einzelnen Agglomerats an ein thermoplastisches organisches Polymer, insbesondere Bindemittel, gebunden und/oder zum Haften gebracht sind.

Der Begriff der "Agglomerate", wie er im Rahmen der vorliegenden Erfindung verwendet wird, ist sehr weit zu verstehen und bezeichnet insbesondere eine mehr oder weniger verfestigte bzw. zusammengefügte Anhäufung von vorher losen Bestandteilen (d. h. einzelnen Adsorberpartikeln = Basispartikeln) zu einem mehr oder weniger festen Verbund. Der Begriff der "Agglomerate" bezeichnet im Rahmen der vorliegenden Erfindung sozusagen technisch hergestellte Zusammenballungen bzw. Anhäufungen einzelner Adsorberpartikel, welche im vorliegenden Fall durch ein organisches Polymer zusammengefügt sind.

Was den Begriff der "Vielzahl von Adsorberpartikeln" anbelangt, so sind hierunter im Rahmen der vorliegenden Erfindung insbesondere mindestens zwei, vorzugsweise mehr als zwei Adsorberpartikel zu verstehen.

Erfindungsgemäß bildet bei den erfindungsgemäß eingesetzten adsorptiven Strukturen das organische Polymer mindestens einen Kern des jeweiligen Agglomerats aus.

Erfindungsgemäß sind dabei die Adsorberpartikel eines einzelnen Agglomerats jeweils an mindestens einem Kern aus organischem Polymer, insbesondere Bindemittel, angeordnet und/oder angelagert. Dabei können die einzelnen Agglomerate jeweils einen oder aber mehrere Kerne aus organischem Polymer, insbesondere Bindemittel, umfassen.

Die Größe des Kerns aus organischem Polymer, insbesondere Bindemittel, kann dabei in weiten Grenzen variieren.

Insbesondere besitzt in den erfindungsgemäß eingesetzten adsorptiven Strukturen der Kern aus organischem Polymer, insbesondere Bindemittel, eine Größe von 100 bis 2.000 µm, insbesondere 150 bis 1.500 µm, vorzugsweise 200 bis 1.000 µm.

Erfindungsgemäß beträgt dabei das Größenverhältnis von Kern aus organischem Polymer, insbesondere Bindemittel, zu einzelnem Adsorberpartikel mindestens 1,25 : 1, vorzugsweise mindestens 1,5 : 1, besonders bevorzugt mindestens 2 : 1, ganz besonders bevorzugt mindestens 3 : 1.

Zur Gewährleistung einer guten Adsorptionseffizienz, insbesondere Adsorptionskinetik und Adsorptionskapazität, enthalten die einzelnen Agglomerate im allgemeinen jeweils mindestens 5 Adsorberpartikel, insbesondere mindestens 10 Adsorberpartikel, vorzugsweise mindestens 15 Adsorberpartikel, besonders bevorzugt mindestens 20 Adsorberpartikel. Die einzelnen Agglomerate können jeweils bis zu 50 Adsorberpartikel, insbesondere bis zu 75 Adsorberpartikel, vorzugsweise bis zu 100 Adsorberpartikel oder mehr, umfassen.

Das Gewichtsverhältnis von Adsorberpartikeln zu organischem Polymer in den einzelnen Agglomeraten und somit im erfindungsgemäßen adsorptiven Formkörper als solchem kann gleichermaßen in weiten Bereichen variieren. Im allgemeinen weisen die einzelnen Agglomerate jeweils ein Gewichtsverhältnis von Adsorberpartikeln zu organischem Polymer je Agglomerat von mindestens 2 : 1, insbesondere mindestens 3 : 1, vorzugsweise mindestens 5 : 1, besonders bevorzugt mindestens 7 : 1, ganz besonders bevorzugt mindestens 8 : 1, auf. Üblicherweise weisen die einzelnen Agglomerate jeweils ein Gewichtsverhältnis von Adsorberpartikeln zu organischem Polymer je Agglomerat im Bereich von 2 : 1 bis 30 : 1, insbesondere 3 : 1 bis 20 : 1, vorzugsweise 4 : 1 bis 15 : 1, besonders bevorzugt 5 : 1 bis 10 : 1, auf. Die vorgenannten Untergrenzen erklären sich dadurch, daß eine ausreichende Anzahl bzw. Menge von Adsorberpartikeln zur Gewährleistung einer ausreichenden Adsorptionseffizienz vorhanden sein muß, wohingegen die vorgenannten Obergrenzen dadurch bedingt sind, daß eine ausreichende Menge an organischem Polymer zur Gewährleistung eines stabilen Verbunds bzw. Agglomerats vorhanden sein müssen.

Im allgemeinen sind die einzelnen Agglomerate der erfindungsgemäß eingesetzten adsorptiven Strukturen selbsttragend ausgebildet. Dies hat den Vorteil, daß kein zusätzlicher Träger erforderlich ist.

Im allgemeinen sind die einzelnen Agglomerate der erfindungsgemäß eingesetzten adsorptiven Strukturen teilchenförmig ausgebildet. Dabei können die Teilchengrößen der einzelnen Agglomerate in weiten Bereichen variieren. Insbesondere können die einzelnen Agglomerate der erfindungsgemäß eingesetzten adsorptiven Strukturen Teilchengrößen, insbesondere Teilchendurchmesser, im Bereich von 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen. Bei den vorgenannten Teilchengrößenangaben handelt es sich um absolute Teilchengrößen.

Typischerweise besitzen die einzelnen Agglomerate der erfindungsgemäß eingesetzten adsorptiven Strukturen jeweils eine himbeer- oder brombeerartige Struktur. Dabei sind einzelne äußere Adsorberpartikel um einen oder mehrere innere Kerne aus organischem Polymer angeordnet.

Erfindungsgemäß ist das eingesetzte organische Polymer thermoplastisch ausgebildet. Üblicherweise ist das organische Polymer weiterhin hitzeklebrig ausgebildet. Bevorzugt ist das organische Polymer aus Polymeren aus der Gruppe von Polyestern, Polyamiden, Polyethern, Polyetherestern und/oder Polyurethanen sowie deren Mischungen und Copolymeren ausgewählt.

Bei dem organischen Polymer handelt es sich bevorzugterweise um ein thermoplastisches Bindemittel, insbesondere um einen vorzugsweise thermoplastischen Klebstoff, bevorzugt auf der Grundlage von Polymeren aus der Gruppe von Polyestern, Polyamiden, Polyethern, Polyetherestern und/oder Polyurethanen sowie deren Mischungen und Copolymeren.

Üblicherweise ist das organische Polymer, insbesondere das Bindemittel, vorzugsweise der Schmelzklebstoff, bei 25 °C und Atmosphärendruck fest.

Typischerweise besitzt das organische Polymer, insbesondere das Bindemittel, vorzugsweise der Schmelzklebstoff, einen Schmelz- oder Erweichungsbereich oberhalb von 100 °C, vorzugsweise oberhalb von 110 °C, insbesondere oberhalb von 120 °C. Im allgemeinen weist das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, auf.

Zur Gewährleistung einer guten Adsorptionseffizienz, insbesondere Adsorptionskinetik und/oder Adsorptionskapazität, ist es vorteilhaft, wenn die Adsorberpartikel der einzelnen Agglomerate zu höchstens 50 %, insbesondere zu höchstens 40 %, bevorzugt zu höchstens 30 %, ganz besonders bevorzugt zu höchstens 20 % oder weniger, ihrer Oberfläche mit organischem Polymer bedeckt und/oder belegt sind. Ein gewisser Bedeckungsgrad der Oberfläche ist jedoch erforderlich, um eine gute Haftung der Adsorberpartikel an das organische Polymer zu gewährleisten.

Was die Adsorberpartikel anbelangt, so besitzen diese üblicherweise eine poröse Struktur. Des weiteren sind die Adsorberpartikel, wie zuvor geschildert, kornförmig, insbesondere kugelförmig ausgebildet. Hierdurch wird einerseits eine möglichst hohe Oberfläche für die Adsorption zur Verfügung gestellt und andererseits eine gute mechanische Belastbarkeit sowie eine gute Fixierbarkeit bzw. Verklebbarkeit gewährleistet.

Die Teilchengrößen der Adsorberpartikel können gleichermaßen in weiten Bereichen variieren. Üblicherweise weisen die Adsorberpartikel absolute Teilchendurchmesser im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, auf.

Auch die mittleren Teilchengrößen der Adsorberpartikel können in weiten Bereichen variieren: Im allgemeinen weisen die Adsorberpartikel mittlere Teilchendurchmesser (D50) im Bereich von 0,01 bis 2 mm, insbesondere 0,05 bis 1,5 mm, vorzugsweise 0,1 bis 1 mm, auf.

Die Adsorberpartikel können aus einem Material bestehen, welches ausgewählt ist aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; metallorganischen Gerüstmaterialien (MOFs) sowie deren Mischungen. Besonders bevorzugt ist Aktivkohle.

Gemäß einer besonders bevorzugten Ausfuhrungsform sind die Adsorberpartikel aus kornförmiger, insbesondere kugelförmiger Aktivkohle gebildet.

Zur Gewährleistung einer guten Adsorptionseffizienz ist es von Vorteil, wenn die erfindungsgemäß eingesetzten Adsorberpartikel eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. Üblicherweise weisen die Adsorberpartikel eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, auf.

Des weiteren sollten die erfindungsgemäß eingesetzten Adsorberpartikel eine gute mechanische Belastbarkeit aufweisen. Üblicherweise weisen die Adsorberpartikel, insbesondere die Aktivkohlepartikel, vorzugsweise die Aktivkohlekörner oder Aktivkohlekügelchen, einen Berstdruck von mindestens 5 Newton, insbesondere einen Berstdruck im Bereich von 5 Newton bis 50 Newton, pro Partikel auf.

Zur Gewährleistung guter Adsorptionseffizienzen sollten die eingesetzten Adsorberpartikel weiterhin über hohe Adsorptionsvolumina, hohe Gesamtporenvolumina nach Gurvich, hohe Gesamtporositäten sowie hohe spezifische Gesamtporenvolumina verzügen.

Üblicherweise weisen die erfindungsgemäß eingesetzten Adsorberpartikel ein ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, auf. Typischerweise weisen die erfindungsgemäß eingesetzten Adsorberpartikel ein Adsorptionsvolumen V_{ads} im Bereich von 250 bis 3.000 cm³/g, insbesondere 300 bis 2.000 cm³/g, vorzugsweise 350 bis 2.500 cm³/g, auf.

Des weiteren weisen die erfindungsgemäß eingesetzten Adsorberpartikel üblicherweise ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, auf. Typischerweise weisen die erfindungsgemäß eingesetzten Adsorberpartikel ein Gesamtporenvolumen nach Gurvich im Bereich von 0,50 bis 2,0 cm³/g, insbesondere 0,55 bis 1,5 cm³/g, vorzugsweise 0,60 bis 1,2 cm³/g, besonders bevorzugt 0,65 bis 1,0 cm³/g, auf.

Ferner verfügen die erfindungsgemäß eingesetzten Adsorberpartikel über eine hohe Gesamtporosität. Üblicherweise weisen die Adsorberpartikel eine Gesamtporosität im Bereich von 10 % bis 80 %, insbesondere 20 % bis 75 %, vorzugsweise 25 % bis 70 %, auf.

Schließlich weisen die erfindungsgemäß eingesetzten Adsorberpartikel ein hohes spezifisches Gesamtporenvolumen auf. Üblicherweise weisen die Adsorberpartikel ein spezifisches Gesamtporenvolumen im Bereich von 0,01 bis 4,0 cm³/g, insbesondere 0,1 bis 3,0 cm³/g, vorzugsweise 0,2 bis 2,0 cm³/g, auf. Dabei kann der Anteil an Poren mit Porendurchmessern ≤ 75 Å, vorteilhafterweise mindestens 65 %, insbesondere mindestens 70 %, vorzugsweise mindestens 75 %, betragen.

Bevorzugt eingesetzte Adsorberpartikel mit den vorgenannten Eigenschaften, insbesondere auf der Basis kugelförmiger Aktivkohle, sind von der Blücher GmbH, Erkrath, Deutschland, oder von der Adsor-Tech GmbH, Premnitz, Deutschland, erhältlich.

Wie zuvor beschrieben, lassen sich die erfindungsgemäß eingesetzten adsorptiven Strukturen bzw. die sie bildenden Agglomerate zu einem erfindungsgemäßen adsorptiven Formkörper verarbeiten, was mittels Verpressung erfolgt.

Ein besonderer Vorteil der erfindungsgemäß eingesetzten adsorptiven Strukturen ist darin zu sehen, daß sie - sowohl in loser Schüttung oder in Form eines Formkörpers - gegenüber einer losen Schüttung einzelner Adsorberpartikel einen deutlich reduzierten Druckverlust aufweisen, wie zuvor beschrieben.

Im Rahmen der vorliegenden Erfindung lassen sich somit ausgehend von kornförmigen bzw. sphärischen Adsorbentien bzw. Adsorberpartikeln, aber auch ausgehend von anderen Formen von Adsorbentien, mit Hilfe von organischen Polymeren, insbesondere Bindemitteln bzw. Schmelzklebern, Agglomerate herstellen, welche im Schüttbett wie aber auch in einer zu einem adsorptiven Formkörper verpreßten Form eine sehr geringe Druckdifferenz aufweisen, insbesondere im Vergleich z. B. mit Schüttungen aus vergleichbaren kornförmigen bzw. sphärischen Adsorbentien bzw. Adsorberpartikeln oder Splitterkohlen. Die erfindungsgemäß eingesetzten adsorptiven Agglomerate und die hieraus insbesondere mittels Verpressen erhältlichen, erfindungsgemäßen adsorptiven Formkörper sind daher besonders für den Einsatz in Anwendungen geeignet, bei denen es sowohl auf eine geringe Druckdifferenz als auch auf einen geringen Anfangsdurchbruch ankommt.

Die vorliegende Erfindung ist folglich mit einer Vielzahl von Vorteilen verbunden, von denen vorstehend nur einige genannt worden sind und nachfolgend in nicht beschränkender und nicht abschließender Weise einige weitere aufgezählt seien:

Wie zuvor erwähnt, weisen die erfindungsgemäß eingesetzten adsorptiven Strukturen bzw. Agglomerate - sowohl im Schüttbett als auch verpreßt zu einem erfindungsgemäßen adsorptiven Formkörper - eine im Vergleich zu den reinen Basisadsorberpartikeln deutlich verringerte Druckdifferenz auf, ohne daß andere Adsorptionseigenschaften, wie z. B. Adsorptionskinetik, Adsorptionskapazität, Anfangsdurchbruch oder dergleichen, beeinträchtigt sind.

Weiterhin weisen die erfindungsgemäß eingesetzten adsorptiven Strukturen bzw. Agglomerate gute mechanische Beständigkeiten bei gleichzeitig guter Flexibilität und Kompressibilität auf, so daß die erfindungsgemäß eingesetzten adsorptiven Strukturen bzw. Agglomerate ohne weiteres verpreßt und zu entsprechenden stabilen und selbsttragenden adsorptiven Formkörpern beliebiger Geometrie verarbeitet werden können, was nachfolgend noch im Detail geschildert ist.

Die erfindungsgemäß eingesetzten adsorptiven Strukturen bzw. Agglomerate ermöglichen einen sehr hohen Aktivierungsgrad und somit eine sehr hohe Kapazität der Basisadsorberpartikel, verbunden mit einer sehr guten mechanischen Stabilität; durch die Agglomeratbildung kommt es - im Vergleich zu den nichtagglomerierten Basisadsorberpartikeln - zu keiner nennenswerten Verringerung der mechanischen Stabilität, und dies bei gleichbleibend sehr hohen Aktivierungsgraden, wie dies für die nichtagglomerierten Basisadsorberpartikel der Fall ist.

Mit den erfindungsgemäß eingesetzten adsorptiven Strukturen bzw. Agglomeraten wird zudem eine hohe Gesamtadsorptionseffizienz auch bei niedrigen Adsorbatkonzentrationen aufgrund sehr hoher möglicher Adsorptionspotentiale der Basisadsorberpartikel erreicht.

Aufgrund der hochreinen Oberflächen der Basisadsorberpartikel werden durch hohe relative Feuchten keine nennenswerten Effizienzverluste beobachtet.

Infolge der hohen Abriebs- und Belastungshärten der Basisadsorberpartikel sind die erfindungsgemäß eingesetzten adsorptiven Strukturen bzw. Agglomerate und die hieraus erhältlichen adsorptiven Formkörper nach der vorliegenden Erfindung zumindest im wesentlichen staubfrei ausgebildet, insbesondere enthalten sie zumindest im wesentlichen keine lungengängigen Staubpartikelgrößen.

Zudem bleibt in den erfindungsgemäß eingesetzten adsorptiven Strukturen bzw. Agglomeraten die hervorragende Imprägnierbarkeit der Basispartikel erhalten (z. B. mehr als 60 % im Benetzungstest).

Zudem wird eine hohe Breitenwirksamkeit der Adsorption durch eine effiziente, im Rahmen des Herstellungsprozesses der Basisadsorberpartikel einstellbare Porengrößenverteilung (z. B. Kombination von sehr hohen Mikro- und Meso-/Makroporenvolumina) sowie eine sehr gute Imprägnierbarkeit der Basisadsorberpartikel erreicht. Im Rahmen der erfindungsgemäß eingesetzten adsorptiven Strukturen bzw. Agglomerate ist es beispielsweise möglich, Adsorberpartikel mit unterschiedlichen Porengrößenverteilungen innerhalb eines einzigen Agglomerats miteinander zu kombinieren, so daß die Breitenwirksamkeit der Adsorption deutlich verbessert wird.

Durch freie Wahl der Agglomeratfraktion im Bereich der Basisadsorberpartikeldurchmesser bis hin zu den Agglomeratdurchmessern ist der Druckverlust frei einstellbar.

Wie zuvor geschildert, wird sowohl bei loser Schüttung der erfindungsgemäß eingesetzten adsorptiven Strukturen bzw. Agglomerate als auch bei den hieraus durch Verpressen erhältlichen adsorptiven Formkörpern nach der vorliegenden Erfindung im Vergleich zu Korn- oder Formaktivkohlen bei gleicher Adsorptionskapazität ein deutlich geringerer Druckverlust beobachtet.

Durch freie Wahl der Basisadsorberpartikelgröße (z. B. veränderliches Oberflächen/Volumen-Verhältnis) und durch freie Wahl des Basisadsorberpartikelaktivierungsgrads (z. B. veränderliche Porengrößenverteilung) ist die Gesamtadsorptionseffizienz und die Gesamtadsorptionskinetik einstellbar bzw. steuerbar.

Gleichermaßen lassen sich Schüttdichte und Kapazität bei vorgegebenem Druckverlust beispielsweise durch freie Wahl der Basisadsorberpartikelgröße (z. B. veränderliches Oberflächen/Volumen-Verhältnis) einstellen.

Infolge des hohen Puffervolumens wird ein etwaiger Adsorptionsverlust aufgrund der organischen Polymerbestandteile, insbesondere Schmelzklebstoffbestandteile, kompensiert, so daß kein signifikantes bis kein geblocktes Porenvolumen durch die organischen Polymerbestandteile vorliegt. Ein etwaiger Kapazitätsverlust infolge der Bestandteile des organischen Polymers ist äuβerst gering.

Weiterer Gegenstand der vorliegenden Erfindung - gemäß einen **zweiten** Aspekt der vorliegenden Erfindung - ein Verfahren zur Herstellung eines erfindungsgemäßen adsorptiven Formkörpers, insbesondere wie er zuvor beschrieben worden ist, wobei im Rahmen dieses Verfahrens adsorptive Strukturen auf Basis von Agglomeraten von Adsorberpartikeln, insbesondere wie zuvor beschrieben, zu einem adsorptiven Formkörper verpreßt werden. Erfindungsgemäß erfolgt das Verpressen unter unter Erwärmen auf Temperaturen unterhalb der Schmelz- oder Erweichungstemperatur des organischen Polymers. Erfindungsgemäß erfolgt das Verpressen unter gleichzeitiger Formgebung.

Die erfindungsgemäß eingesetzten adsorptiven Strukturen auf Basis von Agglomeraten von Adsorberpartikeln können durch ein mehrstufiges Verfahren hergestellt werden, wobei bei diesem mehrstufigen Herstellungsverfahren für die adsorptiven Strukturen derart vorgegangen wird,
a) daß zunächst kornförmige, vorzugsweise kugelförmige Adsorberpartikel einerseits und Partikel von thermoplastischem organischem Polymer, insbesondere Bindemittel, andererseits miteinander in Kontakt gebracht und vermischt werden,
b) daß die resultierende Mischung nachfolgend auf Temperaturen oberhalb der Schmelz- oder Erweichungstemperatur des organischen Polymers erwärmt wird und
c) daß schließlich das resultierende Produkt auf Temperaturen unterhalb der Schmelz- oder Erweichungstemperatur des organischen Polymers abgekühlt wird.

Typischerweise wird in Verfahrensschritt b) die erreichte Temperatur für eine definierte Zeitdauer gehalten, insbesondere für mindestens eine Minute, vorzugsweise mindestens 5 Minuten, vorzugsweise mindestens 10 Minuten. Typischerweise wird die erreichte Temperatur für eine Zeitdauer von 1 bis 600 Minuten, insbesondere 5 bis 300 Minuten, bevorzugt 10 bis 150 Minuten, gehalten. Die Haltedauer ist danach zu bemessen, daß die gesamte Charge auf eine einheitliche Temperatur gebracht wird und alles organische Polymer, insbesondere aller Schmelzkleber, vollständig aufgeschmolzen ist.

Im allgemeinen erfolgt während der Durchführung von Schritt b), insbesondere beim vorgenannten Erwärmungs- und/oder Haltevorgang, ein Energieeintrag, vorzugsweise mittels Mischen. Über den Energieeintrag läßt sich insbesondere die resultierende Agglomeratgröße steuern, wobei mit zunehmendem Energieeintrag eine kleine Agglomeratgröße erhalten wird.

Typischerweise wird das Verfahren zur Herstellung der erfindungsgemäß eingesetzten adsorptiven Strukturen in einem beheizbaren Drehrohr, insbesondere einem Drehrohrofen, durchgeführt. Über die Drehgeschwindigkeit des Drehrohres läßt sich insbesondere der Energieeintrag und somit die resultierende Agglomeratgröße steuern; mit zunehmender Drehgeschwindigkeit lassen sich zunehmend kleinere Agglomeratgrößen erhalten. Durch chargenweises Entladen des Drehrohres lassen sich dann unter Variation der Drehgeschwindigkeiten für die einzelnen Chargen insgesamt multimodale Agglomeratgrößenverteilungen erhalten.

Wie zuvor beschrieben, werden dann schließlich die in Schritt c) resultierenden Agglomerate in einem abschießenden Schritt zu einem adsorptiven Formkörper nach der vorliegenden Erfindung verarbeitet, was unter Verpressen erfolgt. Dabei erfolgt die Verarbeitung zu Formkörpern unter Erwärmen, wobei Temperaturen unterhalb der Schmelz- oder Erweichungstemperatur des organischen Polymers, insbesondere des Schmelzklebers, eingestellt werden, so daß die betreffenden Agglomerate nicht zersetzt werden bzw. nicht zerfallen.

Im Rahmen des mehrstufigen Herstellungsverfahrens für die erfindungsgemäß eingesetzten adsorptiven Strukturen bzw. Agglomerate wird das thermoplastische organische Polymer, insbesondere das Bindemittel, vorzugsweise der Schmelzkleber, typischerweise in Form von Partikeln, insbesondere korn- oder kugelförmigen Partikeln, bevorzugt in Form von bei Raumtemperatur und Atmosphärendruck festen Partikeln, eingesetzt. Dabei kann das organische Polymer üblicherweise mit Partikelgrößen im Bereich von 100 bis 2.000 µm, insbesondere 150 bis 1.500 µm, vorzugsweise 200 bis 1.000 µm, eingesetzt werden. Üblicherweise kann das Größenverhältnis von organischen Polymerpartikeln zu Adsorberpartikeln mit mindestens 1 : 1, insbesondere mindestens 1,25 : 1, vorzugsweise mindestens 1,5 : 1, besonders bevorzugt mindestens 2 : 1, ganz besonders bevorzugt mindestens 3 : 1, gewählt werden.

Im Rahmen des mehrstufigen Herstellungsverfahrens für die erfindungsgemäß eingesetzten adsorptiven Strukturen bzw. Agglomerate kann das Gewichtsverhältnis von Adsorberpartikeln zu organischem Polymer üblicherweise mindestens 2: 1, insbesondere mindestens 3 : 1, vorzugsweise mindestens 5 : 1, besonders bevorzugt mindestens 7 : 1, ganz besonders bevorzugt mindestens 8 : 1, betragen. Üblicherweise variiert das Gewichtsverhältnis von Adsorberpartikeln zu organischem Polymer im Bereich von 2 : 1 bis 30 : 1, insbesondere 3 : 1 bis 20 : 1, vorzugsweise 4 : 1 bis 15 : 1, besonders bevorzugt 5 : 1 bis 10 : 1.

Wie zuvor geschildert, wird als organisches Polymer ein thermoplastisches Bindemittel, insbesondere ein thermoplastischer Schmelzklebstoff, bevorzugt auf der Grundlage von Polymeren aus der Gruppe von Polyestern, Polyamiden, Polyethern, Polyetherestern und/oder Polyurethanen sowie deren Mischungen und Copolymeren, eingesetzt.

Gemäß einer typischen Ausführungsform der vorliegenden Erfindung kann beispielsweise wie folgt vorgegangen werden:

Als organisches Polymer werden, wie zuvor geschildert, typischerweise Schmelzklebstoffe, bevorzugt in Form von sogenannten Pulverklebern, verwendet, wobei eine Vielzahl von Klebstoffen genutzt werden kann. Typische Partikelgrößen für die eingesetzten Klebstoffe variieren im Bereich von 200 bis 1.000 µm. Bevorzugt werden Klebstoffe mit hoher thermischer und chemischer Beständigkeit eingesetzt.

Besonders bevorzugt werden thermoplastische Klebstoffe insbesondere Schmelzklebstoffe, eingesetzt. Es können Klebstoffe mit Polyester-, Polyamid- oder Polyurethan-Hartsegmenten zum Einsatz kommen, welche außerdem Weichsegmente enthalten können, wobei die Weichsegmente aus den Klassen der (Poly)ether und (Poly)ester ausgewählt werden können. Die typischen Polymerbezeichnungen sind dann z. B. Copolyester oder spezifischer Polyetherester.

Wie zuvor beschrieben, werden die Schmelzklebstoffe bevorzugt in Pulverform eingesetzt. Dabei sollte die Partikelgrößenverteilung der Klebstoffe gröβer als die Partikelgrößenverteilung der Basisadsorberpartikel sein, um ein Durchfallen von Kleberbestandteilen in der Schüttung zu verhindern.

Wie zuvor geschildert können dann die Pulverkleberpartikel einerseits und die Basisadsorberpartikel andererseits in einem Drehrohr vorgelegt und intensiv gemischt und oberhalb der Erweichungs- bzw. Schmelztemperatur des Klebstoffes erhitzt und bei dieser Temperatur für eine definierte Zeitdauer gehalten werden. Die thermische Behandlung ist jeweils abhängig vom eingesetzten Klebstoff. Durch mechanische Behandlung, insbesondere durch die Drehgeschwindigkeit des Drehrohres, kann die resultierende Agglomeratgröße beeinflußt werden.

Die Agglomerierung richtet sich nach dem eingesetzten Klebstofftyp. Wie zuvor geschildert, können prinzipiell beliebige Klebstoffe eingesetzt werden. Die Zieltemperatur sollte größer bzw. innerhalb des Schmelz- bzw. Erweichungstemperaturbereichs des Klebstoffs liegen.

Weiterhin sollte beachtet werden, daß im Rahmen des Verfahrens eine Schüttung auf die Zieltemperatur erhitzt werden sollte und daß mit entsprechenden definierten Haltezeiten gearbeitet werden sollte, um eine vollständige Erhitzung der gesamten Schüttung zu erreichen.

Dabei sollte die Zieltemperatur minimal gewählt werden, da eine weitergehende Temperaturerhöhung und somit eine weitergehende Verringerung der Viskosität des Klebstoffs bei bereits erreichter Schmelz- bzw. Erweichungstemperatur des vorliegenden Klebstoffs zu einer verstärkten und somit unerwünschten Porenblockierung der Adsorberpartikel führen würde.

Die mechanische Behandlung, insbesondere die Drehgeschwindigkeit des Drehrohrreaktors, richtet sich nach der gewünschten Agglomeratgrößenverteilung. Dabei kann mit Hilfe erhöhter Drehgeschwindigkeit die Agglomeratgröβenverteilung definiert beeinflußt werden. Eine erhöhte Drehgeschwindigkeit führt zu einer kleineren Agglomeratgrößenverteilung.

Abschließend werden dann - wie zuvor geschildert - die auf diese Weise erhaltenen adsorptiven Strukturen auf Basis von Agglomeraten von Adsorberpartikeln zu einem adsorptiven Formkörper nach der vorliegenden Erfindung verpreßt, wobei das Verpressen unter Erwärmen auf Temperaturen unterhalb der Schmelz- oder Erweichungstemperatur des organischen Polymers erfolgt und wobei das Verpressen unter gleichzeitiger Formgebung erfolgt, wie dies zuvor geschildert worden ist.

Für weitergehende Einzelheiten zu dem erfindungsgemäßen Herstellungsverfahren für den erfindungsgemäßen adsorptiven Formkörper kann auf die obigen Ausführungen zu dem erfindungsgemäßen adsorptiven Formkörper als solchem verwiesen werden, welche in bezug auf das erfindungsgemäße Herstellungsverfahren entsprechend gelten.

Weiterer Gegenstand der vorliegenden Erfindung - gemäß einem **dritten** Aspekt der vorliegenden Erfindung - ist die erfindungsgemäße Verwendung des adsorptiven Formkörpers nach der vorliegenden Erfindung.

So kann der erfindungsgemäße adsorptive Formkörper für die Adsorption von Giftstoffen, Schadstoffen und Gerüchen, insbesondere aus Gas- oder Luftströmen oder aber aus Flüssigkeiten, insbesondere Wasser, eingesetzt werden.

Weiterhin kann der erfindungsgemäße adsorptive Formkörper zur Reinigung oder Aufbereitung von Gasen, Gasströmen oder Gasgemischen, insbesondere Luft, oder von Flüssigkeiten, insbesondere Wasser, Verwendung finden.

Des weiteren kann der erfindungsgemäße adsorptive Formkörper zur Verwendung in Adsorptionsfilter eingesetzt werden.

Gleichermaßen läßt sich der erfindungsgemäße adsorptive Formkörper zur Herstellung von Filtern, insbesondere Adsorptionsfiltern, einsetzen.

Schließlich kann der erfindungsgemäße adsorptive Formkörper als Sorptionsspeicher für Gase, insbesondere Wasserstoff, eingesetzt werden.

Für weitergehende Einzelheiten zu der erfindungsgemäßen Verwendung des adsorptiven Formkörpers nach der vorliegenden Erfindung kann auf die obigen Ausführungen zu den übrigen Erfindungsaspekten verwiesen werden, welche in bezug auf diesen erfindungsgemäßen Aspekt entsprechend gelten.

Schließlich ist weiterer Gegenstand der vorliegenden Erfindung - gemäß einem **vierten** Aspekt der vorliegenden Erfindung - ein Filter, welches einen adsorptiven Formkörper nach der vorliegenden Erfindung umfaßt.

Insbesondere weist dabei das Filter einen längenbezogenen Druckverlust bei einer Strömungsgeschwindigkeit von 0,2 m/s von höchstens 200 Pa/cm, insbesondere im Bereich von 5 bis 200 Pa/cm, auf.

Vorteilhafterweise weist das erfindungsgemäße Filter einen längenbezogenen Druckverlust bei einer Strömungsgeschwindigkeit von 0,2 m/s von höchstens 150 Pa/cm, vorzugsweise höchstens 100 Pa/cm, besonders bevorzugt höchstens 90 Pa/cm, ganz besonders bevorzugt höchstens 70 Pa/cm, noch mehr bevorzugt höchstens 50 Pa/cm, auf.

Typischerweise weist das erfindungsgemäße Filter einen längenbezogenen Druckverlust bei einer Strömungsgeschwindigkeit von 0,2 m/s im Bereich von 5 bis 150 Pa/cm, vorzugsweise 5 bis 100 Pa/cm, besonders bevorzugt 7,5 bis 90 Pa/cm, ganz besonders bevorzugt 10 bis 80 Pa/cm, auf.

Für weitergehende Einzelheiten zu dem erfindungsgemäßen Filter kann auf die obigen Ausführungen zu den übrigen Erfindungsaspekten verwiesen werden, welche in bezug auf diesen erfindungsgemäßen Aspekt entsprechend gelten.

Weitere vorteilhafte Eigenschaften, Aspekte und Merkmale der vorliegenden Erfindung ergeben sich aus der folgenden Beschreibung von in den Figuren dargestellten Ausführungsbeispielen. Es zeigt:
- Fig. 1: eine vergrößerte photographische Darstellung erfindungsgemäß eingesetzter adsorptiver Strukturen auf Basis von Agglomeraten von Adsorberpartikeln;
- Fig. 2: eine 200fache mikroskopische Vergrößerung einer erfindungsgemäß eingesetzten adsorptiven Struktur auf Basis eines Agglomerats von Adsorberpartikeln;
- Fig. 3: eine 500fache mikroskopische Vergrößerung einer erfindungsgemäß eingesetzten adsorptiven Struktur auf Basis eines Agglomerats von Adsorberpartikeln;
- Fig. 4 und 7: graphische Darstellungen der Abhängigkeit des längenbezogenen Druckverlusts in [Pa/cm] bei einer Strömungsgeschwindigkeit von 0,2 m/s von der Agglomeratgröße in [mm] verschiedener erfindungsgemäß eingesetzter adsorptiver Strukturen;
- Fig. 5 und 8: graphische Darstellungen der Abhängigkeit des längenbezogenen Druckverlusts in [Pa/cm] bei einer Strömungsgeschwindigkeit von 0,2 m/s von der Schüttdichte in [g/l] verschiedener erfindungsgemäß eingesetzter adsorptiver Strukturen;
- Fig. 6 und 9: zeitabhängige Durchbruchskurven von Schüttungen verschiedener erfindungsgemäß eingesetzter adsorptiver Strukturen in Abhängigkeit von der Agglomeratgröße;
- Fig. 10 bis 12: unterschiedliche geometrische Formen erfindungsgemäßer adsorptiver Formkörper, welche ausgehend von erfindungsgemäß eingesetzten adsorptiven Strukturen durch Verpressen hergestellt sind.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Nachfolgend wird die Herstellung adsorptiver Strukturen auf Basis von Agglomeraten von Adsorberpartikeln sowie hieraus herstellbarer adsorptiver Formkörper nach der vorliegenden Erfindung beschrieben.

Bei der Herstellung der adsorptiven Strukturen bzw. Agglomerate wird derart vorgegangen, daß zunächst kugelförmige Adsorberpartikel auf Basis von Aktivkohle (z. B. erhältlich von der Blücher GmbH, Erkrath, Deutschland, oder von der Adsor-Tech GmbH, Premnitz, Deutschland) einerseits und thermoplastische Schmelzklebstoffpartikel, im allgemeinen mit Korngrößen im Bereich von 200 bis 1.000 µm, (z. b. Copolyester-Schmelzklebstoffe der EMSChemie AG, EMS-GRILTECH, Schweiz) andererseits miteinander in Kontakt gebracht und in einem Drehrohr gemischt und nachfolgend oberhalb der Schmelz- oder Erweichungstemperatur des betreffenden Schmelzklebers erwärmt und für eine definierte Zeitdauer bei dieser Temperatur gehalten werden und schließlich das resultierende Produkt unterhalb der Schmelz- oder Erweichungstemperatur des betreffenden Schmelzklebers abgekühlt wird. Erfindungsgemäß geeignete Schmelzklebstoffe besitzen beispielsweise die folgenden Eigenschaften: Schmelzbereich: 118 bis 123 °C, Schmelzviskosität: 350 mPas, Laminierungstemperatur: 120 bis 150 °C, Hitzebeständigkeit: 100 °C, Waschbeständigkeit: 75 °C.

Das Verfahren wird in einem beheizbaren Drehrohr durchgeführt, wobei über die Drehgeschwindigkeit des Drehrohres der Energieeintrag und somit die resultierende Agglomeratgröße gesteuert wird.

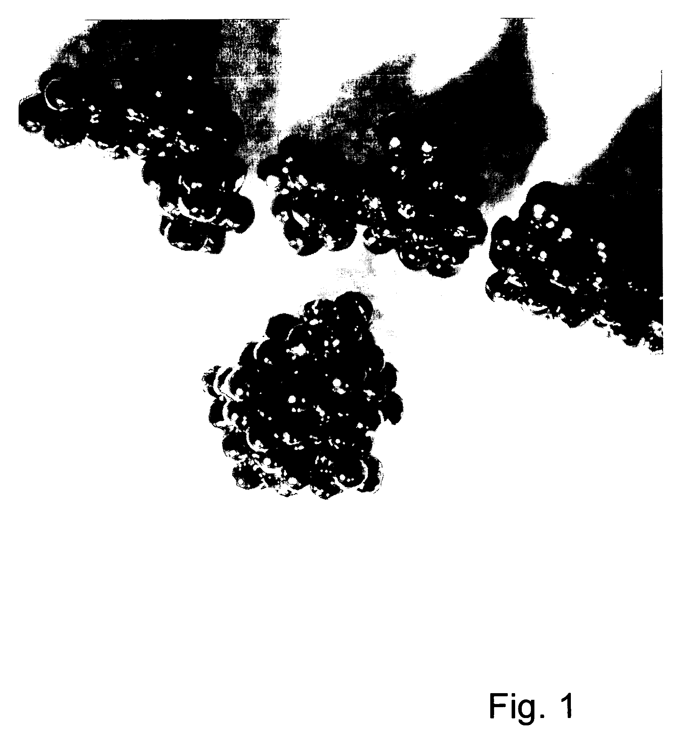

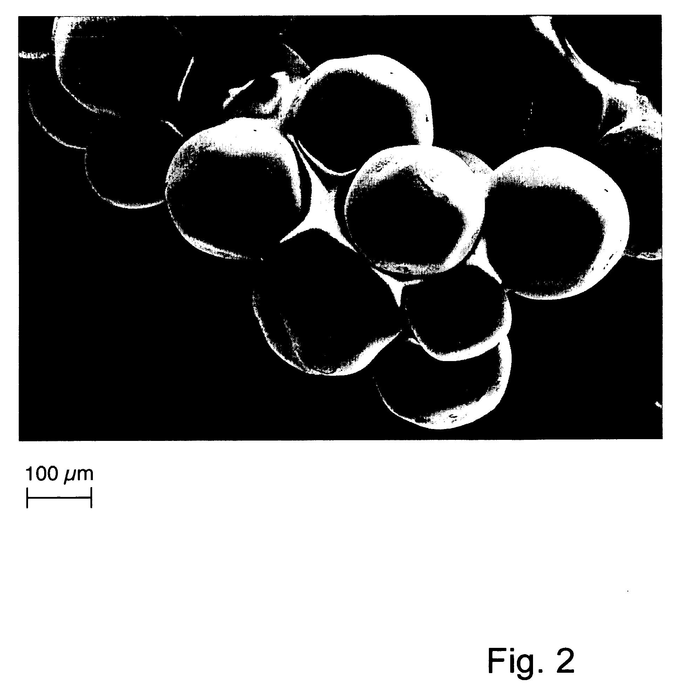

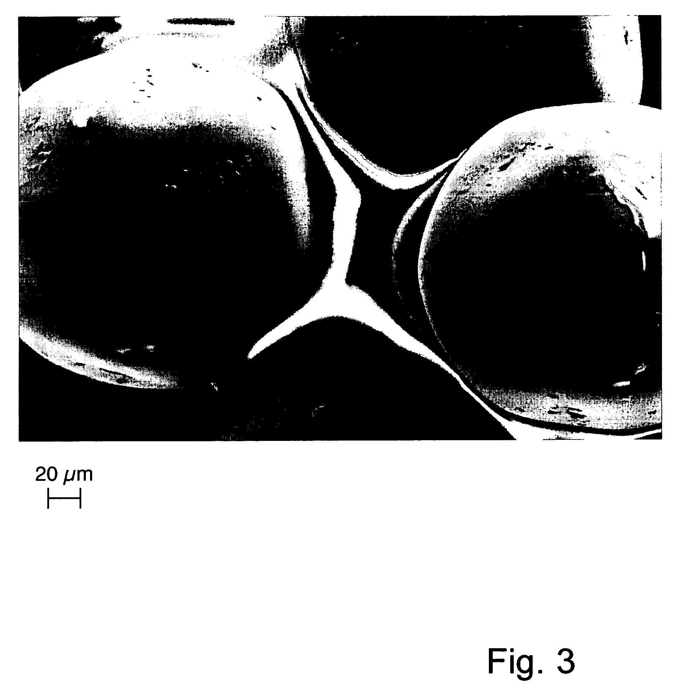

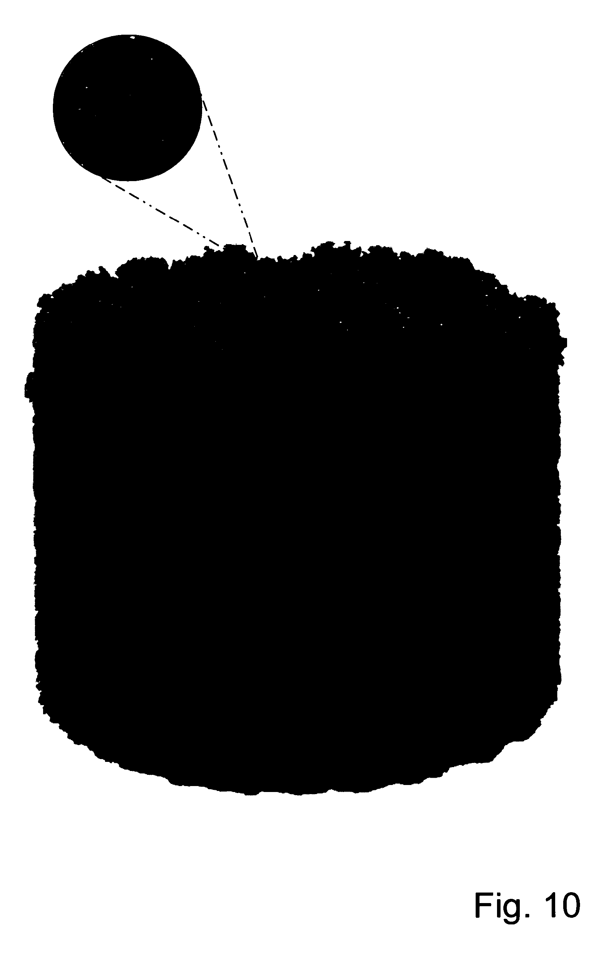

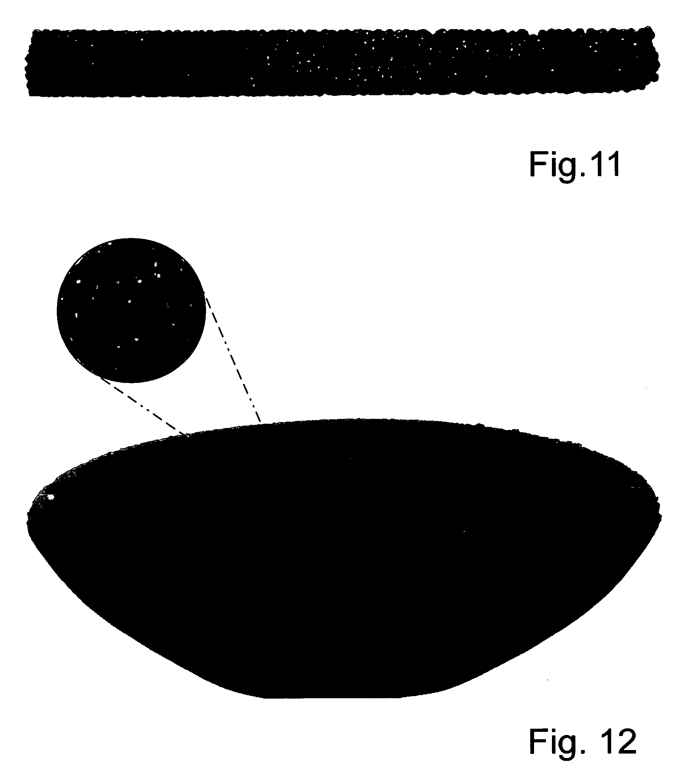

Die resultierenden Agglomerate werden nachfolgend analysiert und bewertet. Betreffende Beispiele der adsorptiven Strukturen sind in den Fig. 1 bis 3 wiedergegeben. Nachfolgend werden die auf diese Weise hergestellten adsorptiven Strukturen bzw. Agglomerate zu adsorptiven Formkörpern nach der vorliegenden Erfindung verarbeitet, was unter Verpressen bei gleichzeitiger Formgebung unter Erwärmung unterhalb der Schmelz- bzw. Erweichungstemperatur des betreffenden Schmelzklebers erfolgt. Es resultieren adsorptive Formkörper nach der vorliegenden Erfindung. Betreffende Beispiele sind in den Fig. 10 bis 12 abgebildet.

### Beispiel Herstellung Agglomerate 1

Ausgangsmaterialien:
- Basisadsorberpartikel: kugelförmige Aktivkohle, polydispers, fein, Körnung < 0,315 mm
- Thermoplastischer Schmelzklebstoff, Körnung 200 bis 1.000 µm
- Klebereinsatzverhältnis bezüglich Gewicht: 1 : 5 (Kleber : Basispartikel)
- Zieltemperatur: T = 175 °C
- Haltezeit nach Erreichen Zieltemperatur: t = 30 min
- Drehgeschwindigkeit Drehrohrreaktor: n = 1 U/min

Die folgende Tabelle stellt beispielhaft, bezüglich der entstandenen Agglomerate, den gewichtsspezifischen Kleberanteil sowie die gewichtsspezifische Butanadsorption dar. Der Beispielversuch wird redundant durchgeführt.

**Tabelle 1: Gewichtsspezifischer Kleberanteil, gewichtsspezifische Butanadsorption (BA-Adsorption)**

| Probe | Kleberbestandteile [%] | BA-Adsorption [%] |
|---|---|---|
| | | |
| Beispiel 1 | 12,0 | 25,7 |
| Beispiel 2 | 12,1 | 25,6 |

Die entstandenen Agglomerate werden in folgende Siebfraktionen geteilt.
- 0,6 - 1,0 mm (Agglomerate I)
- 0,8 - 1,25 mm (Agglomerate II)
- 1,25 - 2,5 mm (Agglomerate III)

Die folgende Tabelle 2 stellt beispielhaft ermittelte Werte zu den abgesiebten Agglomeraten dar.

**Tabelle 2: Ermittelte Werte zu den abgesiebten Agglomeraten**

| Betestete Fraktion | Druckverlust pro Länge (v = 0,2 m/s) | Schüttdichte mit Kleberbestandteilen | Kleberbestandteile | Schüttdichte ohne Kleberbestandteile |
|---|---|---|---|---|
| [mm] | [Pa/cm] | [g/l] | (%) | [g/l] |
| | | | | |
| 0,6-1,0 | 62 | 442 | 11,2 | 392 |
| 0,6-1,0 | 69 | 462 | 11,2 | 410 |
| 0,8-1,25 | 40 | 411 | 11,6 | 363 |
| 0,8-1,25 | 40 | 409 | 11,6 | 362 |
| 1,25-2,5 | 15 | 329 | 12,7 | 287 |
| 1,25-2,5 | 16 | 317 | 12,7 | 277 |

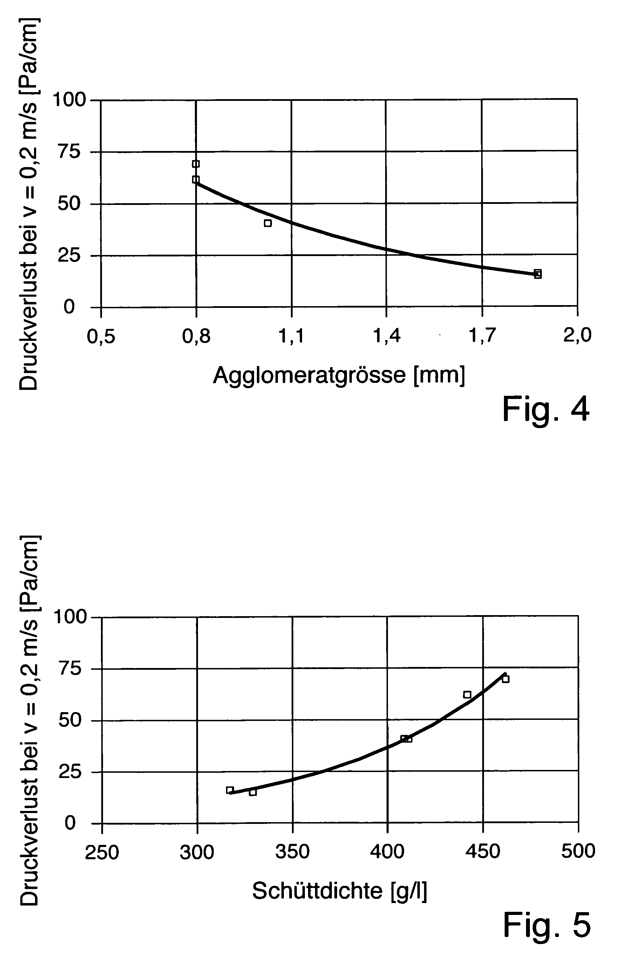

Die Diagramme gemäß Fig. 4 und 5 stellen beispielhaft den Verlauf des Druckverlusts über die Agglomeratgröße (Fig. 4) sowie den Verlauf des Druckverlusts über die Schüttdichte mit Kleberbestandteilen (Fig. 5) dar.

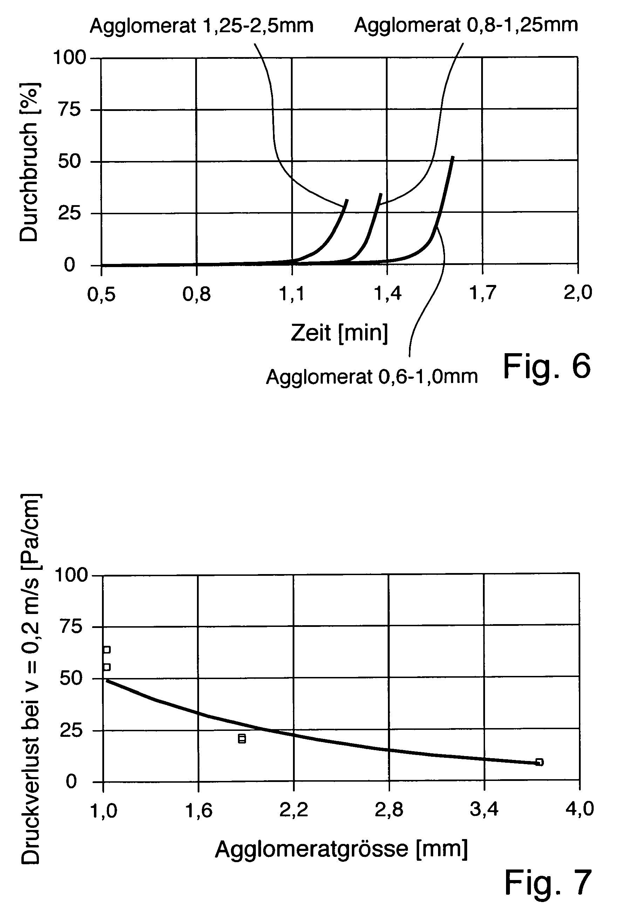

Das Diagramm gemäß Fig. 6 stellt beispielhaft Durchbruchskurven (Toluol) verschiedener Agglomerate unterschiedlicher Größe dar (Strömungsgeschwindigkeit v = 0,1 m/s; Eingangskonzentration c = 80 ppm Toluol; relative Feuchtigkeit 50 %; Temperatur T = 23 °C; Schüttung mit Höhe h = 20 mm).

Die folgende Tabelle 3 stellt beispielhaft Meßergebnisse und Parameter der Durchbruchskurven im Vergleich zu herkömmlichen Aktivkohlefiltern dar. Es werden Schüttungen von Agglomeraten unterschiedlicher Agglomeratgröße (agglomerierte Basisadsorberpartikel von < 0,315 mm) mit Schüttungen herkömmlicher Aktivkohlepartikel (Vergleichsbeispiel; Teilchengröße: 0,8 bis 1,7 mm) verglichen.

**Tabelle 3: Meßergebnisse und Parameter der Durchbruchskurven im Vergleich zu herkömmlichen Aktivkohlefiltern**

| Probe | Agglomerat I | Agglomerat II | Agglomerat III | Herkömmlicher Aktivkohlefilter (Vergleich) |
|---|---|---|---|---|
| Größe [mm] | 0,6 - 1,0 | 0,8 - 1,25 | 1,25-2,5 | 0,8 - 1,7 |
| Schütthöhe [mm] | 20,0 | 20,0 | 20,0 | 20,0 |
| Durchm. Schüttung [mm] | 50,0 | 50,0 | 50,0 | 50,0 |
| Volumen Schüttung [ml] | 39,3 | 39,3 | 39,3 | 39,3 |
| Gewicht Schüttung [g] | 17,9 | 16,1 | 12,9 | 21,9 |
| Schüttdichte [g/cm³] | 0,5 | 0,4 | 0,3 | 0,6 |
| Toluol-Konzentration [ppm] | 79,4 | 79,8 | 79,3 | 80,2 |
| Temperatur [°C] | 23,0 | 23,2 | 23,2 | 22,7 |
| rel. Feuchte [%] | 49,9 | 49,9 | 49,9 | 49,9 |
| Anströmgeschw. (Sollwert) [m/s] | 0,1 | 0,1 | 0,1 | 0,1 |
| Druckverlust [Pa] | 53,8 | 33,2 | 9,1 | 58,0 |
| Durchbr. [%] / Zeit [min] | | | | |
| 1 | 0,1 | 0,0 | 0,0 | 0,0 |
| 5 | 0,1 | 0,0 | 0,0 | 0,0 |
| 10 | 0,1 | 0,0 | 0,0 | 0,0 |
| 30 | 0,1 | 0,1 | 0,1 | 0,0 |
| 60 | 0,1 | 0,1 | 0,1 | 0,1 |
| 120 | 0,1 | 0,1 | 0,1 | 0,1 |
| 180 | 0,1 | 0,1 | 0,1 | 0,1 |
| 240 | 0,1 | 0,1 | 0,1 | 0,1 |
| 360 | 0,1 | 0,1 | 0,2 | 0,1 |
| 600 | 0,1 | 0,1 | 0,4 | 0,2 |
| 900 | 0,3 | 0,5 | 1,1 | 0,7 |
| 1.200 | 0,8 | 1,2 | 13,3 | 18,8 |
| Zeit [min] bis Durchbruch [%] | | | | |
| 5 | 1649,3 | 1344,0 | 1100,5 | 1084,3 |
| 10 | 1715,7 | 1385,1 | 1172,3 | 1150,3 |
| 30 | 1799,3 | 1460,7 | 1286,3 | 1230,9 |

### Beispiel Herstellung Agglomerate 2

Ausgangsmaterialien:
- Basisadsorberpartikel: kugelförmige Aktivkohle, polydispers, grob, Körnung 0,56 - 0,71 mm
- Thermoplastischer Schmelzklebstoff, Körnung 500 bis 1.000 µm
- Klebereinsatzverhältnis bezüglich Gewicht: 1 : 10 (Kleber : Basispartikel)
- Zieltemperatur: T = 175 °C
- Haltezeit nach Erreichen Zieltemperatur: t = 30 min
- Drehgeschwindigkeit Drehrohrreaktor: n = 1 U/min

Die folgende Tabelle stellt beispielhaft, bezüglich der entstandenen Agglomerate, den gewichtsspezifischen Kleberanteil sowie die gewichtsspezifische Butanadsorption dar. Der Beispielversuch wird redundant durchgeführt.

**Tabelle 4: Gewichtsspezifischer Kleberanteil, gewichtsspezifische Butanadsorption (BA-Adsorption)**

| Probe | Kleberbestandteile [%] | BA-Adsorption [%] |
|---|---|---|
| | | |
| Beispiel 1 | 6,8 | 30,7 |
| Beispiel 2 | 4,8 | 32,4 |

Die entstandenen Agglomerate werden in folgende Siebfraktionen geteilt.
- 0,8 - 1,25 mm (Agglomerate I')
- 1,25 - 2,5 mm (Agglomerate I")
- 2,5 - 5,0 mm (Agglomerate I"')

Die folgende Tabelle 5 stellt beispielhaft ermittelte Werte zu den abgesiebten Agglomeraten dar.

**Tabelle 5: Ermittelte Werte zu den abgesiebten Agglomeraten**

| Betestete Fraktion | Druckverlust pro Länge (v = 0,20 m/s) | Schüttdichte mit Kleberbestandteilen | Kleberbestandteile | Schüttdichte ohne Kleberbestandteile |
|---|---|---|---|---|
| [mm] | [Pa/cm] | [g/l] | (%) | [g/l] |
| | | | | |
| 0,8 - 1,25 | 55 | 485 | 2,7 | 472 |
| 0,8 - 1,25 | 64 | 482 | 2,7 | 469 |
| 1,25 - 25 | 20 | 384 | 4,6 | 366 |
| 1,25 - 25 | 21 | 392 | 4,6 | 374 |
| 2,5 - 5,0 | 9 | 290 | 5,6 | 274 |
| 2,5 - 5,0 | 9 | 290 | 5,6 | 274 |

Die Diagramme gemäß Fig. 6 und 7 stellen beispielhaft den Verlauf des Druckverlusts über die Agglomeratgröße (Fig. 6) sowie den Verlauf des Druckverlusts über die Schüttdichte mit Kleberbestandteilen (Fig. 7) dar.

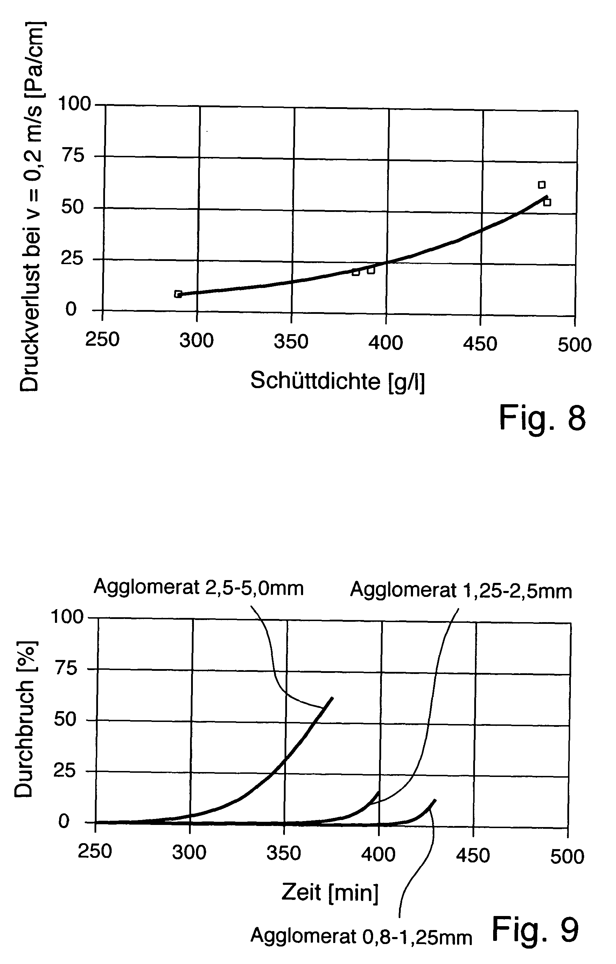

Das Diagramm gemäß Fig. 8 stellt beispielhaft Durchbruchskurven (Toluol) verschiedener Agglomerate unterschiedlicher Größe dar (Strömungsgeschwindigkeit v = 0,1 m/s; Eingangskonzentration c = 80 ppm Toluol; relative Feuchtigkeit 50 %; Temperatur T = 23 °C; Schüttung mit Höhe h = 20 mm).

Die folgende Tabelle 6 stellt beispielhaft Meßergebnisse und Parameter der Durchbruchskurven im Vergleich zu herkömmlichen Aktivkohlefiltern dar. Es werden Schüttungen von Agglomeraten unterschiedlicher Agglomeratgröße (agglomerierte Basisadsorberpartikel von 0,56 - 0,71 mm) mit Schüttungen herkömmlicher Aktivkohlepartikel (Vergleichsbeispiel; Teilchengröße: 0,8 bis 1,7 mm) verglichen.

**Tabelle 6: Meßergebnisse und Parameter der Durchbruchskurven im Vergleich zu herkömmlichen Aktivkohlefiltern**

| Probe | Agglomerat I' | Agglomerat II' | Agglomerat III' | Herkömmlicher Aktivkohlefilter (Vergleich) |
|---|---|---|---|---|
| Größe [mm] | 0,8-1,25 | 1,25-2,5 | 2,5-5,0 | 0,8-1,7mm |
| Schütthöhe [mm] | 20,0 | 20,0 | 20,0 | 20,0 |
| Durchmesser Schüttung [mm] | 50,0 | 50,0 | 50,0 | 50,0 |
| Vol. Schüttung [ml] | 39,3 | 39,3 | 39,3 | 39,3 |
| Gewicht Schüttung [g] | 19,0 | 15,1 | 11,4 | 21,9 |
| Schüttdichte [g/cm³] | 0,5 | 0,4 | 0,3 | 0,6 |
| Toluol-Konzentration [ppm] | 79,4 | 81,9 | 80,2 | 80,2 |
| Temperatur [°C] | 22,9 | 22,9 | 22,7 | 22,7 |
| rel. Feuchte [%] | 49,9 | 49,9 | 49,9 | 49,9 |
| Anströmgeschw. (Sollwert) [m/s] | 0,1 | 0,1 | 0,1 | 0,1 |
| Druckverlust [Pa] | 39,5 | 10,7 | 3,1 | 58,0 |
| Durchbr.[%]/Zeit[min] | | | | |
| 1 | 0,0 | 0,0 | 0,4 | 0,0 |
| 5 | 0,0 | 0,0 | 0,4 | 0,0 |
| 10 | 0,0 | 0,0 | 0,4 | 0,0 |
| 30 | 0,0 | 0,0 | 0,4 | 0,0 |
| 60 | 0,0 | 0,0 | 0,5 | 0,1 |
| 120 | 0,0 | 0,0 | 0,7 | 0,1 |
| 180 | 0,0 | 0,0 | 0,9 | 0,1 |
| 240 | 0,0 | 0,0 | 1,2 | 0,1 |
| 360 | 0,0 | 0,1 | 2,1 | 0,1 |
| 600 | 0,1 | 0,2 | 6,0 | 0,2 |
| 900 | 0,1 | 0,6 | 21,9 | 0,7 |
| 1200 | 0,3 | 2,2 | 56,2 | 18,8 |
| Zeit [min] bis Durchbruch [%] | | | | |
| 5 | 1718,5 | 1347,6 | 561,7 | 1084,3 |
| 10 | 1774,3 | 1440,1 | 714,3 | 1150,3 |
| 30 | 1875,5 | 1582,5 | 984,7 | 1230,9 |

## Patentansprüche

1. Adsorptiver Formkörper, wobei der Formkörper aus einer Vielzahl adsorptiver Strukturen auf Basis von Agglomeraten von Adsorberpartikeln aufgebaut ist, wobei die einzelnen Agglomerate von Adsorberpartikeln der adsorptiven Strukturen jeweils eine Vielzahl von kornförmigen Adsorberpartikeln umfassen, wobei die Adsorberpartikel eines einzelnen Agglomerats über ein thermoplastisches organisches Polymer miteinander verbunden sind, wobei das organische Polymer mindestens einen Kern des jeweiligen Agglomerats bildet und wobei die Adsorberpartikel eines einzelnen Agglomerats jeweils an mindestens einem Kern aus organischem Polymer angeordnet und/oder angelagert sind, wobei das Größenverhältnis von Kern aus organischem Polymer zu einzelnem Adsorberpartikel mindestens 1,25 : 1 beträgt und wobei der Formkörper erhältlich ist durch Verpressen der adsorptiven Strukturen auf Basis von Agglomeraten von Adsorberpartikeln, wobei das Verpressen unter Erwärmen auf Temperaturen unterhalb der Schmelz- oder Erweichungstemperatur des organischen Polymers und unter gleichzeitiger Formgebung erfolgt.

2. Adsorptiver Formkörper nach Anspruch 1, **dadurch gekennzeichnet,**
**dass** der Formkörper einstückig und/oder monolithisch ausgebildet ist und/oder dass der Formkörper zylindrisch, stabförmig, tellerförmig, quaderförmig oder polyedrisch ausgebildet ist.

3. Adsorptiver Formkörper nach Anspruch 1 oder 2, **dadurch gekennzeichnet, dass** die einzelnen Agglomerate jeweils einen oder mehrere Kerne aus organischem Polymer, insbesondere Bindemittel, umfassen.

4. Adsorptiver Formkörper nach einem der vorangehenden Ansprüche, **dadurch gekennzeichnet, dass** die einzelnen Agglomerate jeweils mindestens 5 Adsorberpartikel, insbesondere mindestens 10 Adsorberpartikel, vorzugsweise mindestens 15 Adsorberpartikel, besonders bevorzugt mindestens 20 Adsorberpartikel, umfassen und/oder dass die einzelnen Agglomerate jeweils bis zu 50 Adsorberpartikel, insbesondere bis zu 75 Adsorberpartikel, vorzugsweise bis zu 100 Adsorberpartikel oder mehr, umfassen.

5. Adsorptiver Formkörper nach einem der vorangehenden Ansprüche, **dadurch gekennzeichnet, dass** die einzelnen Agglomerate jeweils ein Gewichtsverhältnis von Adsorberpartikeln zu organischem Polymer je Agglomerat von mindestens 2 : 1, insbesondere mindestens 3 : 1, vorzugsweise mindestens 5 : 1, besonders bevorzugt mindestens 7 : 1, ganz besonders bevorzugt mindestens 8 : 1, aufweisen und/oder dass die einzelnen Agglomerate jeweils ein Gewichtsverhältnis von Adsorberpartikeln zu organischem Polymer je Agglomerat im Bereich von 2 : 1 bis 30 : 1, insbesondere 3 : 1 bis 20 : 1, vorzugsweise 4 : 1 bis 15 : 1, besonders bevorzugt 5 : 1 bis 10 : 1, aufweisen.

6. Adsorptiver Formkörper nach einem der vorangehenden Ansprüche, **dadurch gekennzeichnet,**
**dass** die einzelnen Agglomerate selbsttragend ausgebildet sind und/oder
**dass** die einzelnen Agglomerate teilchenförmig ausgebildet sind, insbesondere wobei die Agglomerate Teilchendurchmesser im Bereich von 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen.

7. Adsorptiver Formkörper nach einem der vorangehenden Ansprüche, **dadurch gekennzeichnet,**
**dass** das organische Polymer thermoplastisch ausgebildet ist und/oder
**dass** das organische Polymer hitzeklebrig ausgebildet ist und/oder
**dass** das organische Polymer aus Polymeren aus der Gruppe von Polyestern, Polyamiden, Polyethern, Polyetherestern und/oder Polyurethanen sowie deren Mischungen und Copolymeren ausgewählt ist und/oder
**dass** das organische Polymer ein thermoplastisches Bindemittel, insbesondere ein thermoplastischer Schmelzklebstoff, bevorzugt auf der Grundlage von Polymeren aus der Gruppe von Polyestern, Polyamiden, Polyethern, Polyetherestern und/oder Polyurethanen sowie deren Mischungen und Copolymeren, ist und/oder
**dass** das organische Polymer, insbesondere das Bindemittel, vorzugsweise der Schmelzklebstoff, bei 25 °C und Atmosphärendruck fest ist und/oder dass das organische Polymer, insbesondere das Bindemittel, vorzugsweise der Schmelzklebstoff, einen Schmelz- oder Erweichungsbereich oberhalb von 100 °C, vorzugsweise oberhalb von 110 °C, insbesondere oberhalb von 120 °C, aufweist und/oder
**dass** das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, aufweist.

8. Adsorptiver Formkörper nach einem der vorangehenden Ansprüche, **dadurch gekennzeichnet,**
**dass** die Adsorberpartikel der einzelnen Agglomerate zu höchstens 50 %, insbesondere zu höchstens 40 %, bevorzugt zu höchstens 30 %, ganz besonders bevorzugt zu höchstens 20 %, ihrer Oberfläche mit organischem Polymer bedeckt und/oder belegt sind und/oder
**dass** die Adsorberpartikel eine poröse Struktur aufweisen und/oder
**dass** die Adsorberpartikel kugelförmig ausgebildet sind.

9. Adsorptiver Formkörper nach einem der vorangehenden Ansprüche, **dadurch gekennzeichnet,**
**dass** die Adsorberpartikel Teilchendurchmesser im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, aufweisen und/oder
**dass** die Adsorberpartikel mittlere Teilchendurchmesser (D50) im Bereich von 0,01 bis 2 mm, insbesondere 0,05 bis 1,5 mm, vorzugsweise 0,1 bis 1 mm, aufweisen.

10. Adsorptiver Formkörper nach einem der vorangehenden Ansprüche, **dadurch gekennzeichnet,**
**dass** die Adsorberpartikel aus einem Material bestehen, welches ausgewählt ist aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; metallorganischen Gerüstmaterialien (MOFs) sowie deren Mischungen, besonders bevorzugt Aktivkohle, und/oder
**dass** die Adsorberpartikel aus kornförmiger, insbesondere kugelförmiger Aktivkohle gebildet sind und/oder
**dass** die Adsorberpartikel eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen und/oder
**dass** die Adsorberpartikel eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, aufweisen und/oder
**dass** die Adsorberpartikel, insbesondere die Aktivkohlepartikel, vorzugsweise die Aktivkohlekörner oder Aktivkohlekügelchen, einen Berstdruck von mindestens 5 Newton, insbesondere einen Berstdruck im Bereich von 5 Newton bis 50 Newton, pro Partikel aufweisen.

11. Verfahren zur Herstellung eines adsorptiven Formkörpers gemäß den vorangehenden Ansprüchen,
**dadurch gekennzeichnet,**
**dass** adsorptive Strukturen auf Basis von Agglomeraten von Adsorberpartikeln, wie in einem der Ansprüche 1 bis 10 definiert, zu einem adsorptiven Formköper verpresst werden, wobei das Verpressen unter Erwärmen auf Temperaturen unterhalb der Schmelz- oder Erweichungstemperatur des organischen Polymers und unter gleichzeitiger Formgebung erfolgt.

12. Verfahren nach Anspruch 11, **dadurch gekennzeichnet, dass** die adsorptiven Strukturen auf Basis von Agglomeraten von Adsorberpartikeln durch ein mehrstufiges Verfahren dadurch hergestellt werden,
a) dass zunächst kornförmige, vorzugsweise kugelförmige Adsorberpartikel einerseits und Partikel von thermoplastischem organischem Polymer, insbesondere Bindemittel, andererseits miteinander in Kontakt gebracht und vermischt werden,
b) dass die resultierende Mischung nachfolgend auf Temperaturen oberhalb der Schmelz- oder Erweichungstemperatur des organischen Polymers erwärmt wird und
c) dass schließlich das resultierende Produkt auf Temperaturen unterhalb der Schmelz- oder Erweichungstemperatur des organischen Polymers abgekühlt wird.

13. Verwendung eines adsorptiven Formkörpers gemäß den vorangehenden Ansprüchen für die Adsorption von Giftstoffen, Schadstoffen und Gerüchen, insbesondere aus Gas- oder Luftströmen oder aber aus Flüssigkeiten, insbesondere Wasser, oder zur Reinigung oder Aufbereitung von Gasen, Gasströmen oder Gasgemischen, insbesondere Luft, oder von Flüssigkeiten, insbesondere Wasser.

14. Verwendung eines adsorptiven Formkörpers gemäß den vorangehenden Ansprüchen zur Verwendung in Adsorptionsfiltern oder zur Herstellung von Filtern, insbesondere Adsorptionsfiltern, oder als Sorptionsspeicher für Gase, insbesondere Wasserstoff.

15. Filter, umfassend einen adsorptiven Formkörper gemäß einem der Ansprüche 1 bis 10.

## Claims

1. Adsorbent molded part, wherein the molded part comprises a plurality of adsorbent structures based on agglomerates of adsorbent particles, wherein the individual agglomerates of the adsorbent particles of the adsorbent structures each comprise a plurality of grain-shaped adsorbent particles, wherein the adsorbent particles of a single agglomerate are connected to each other via a thermoplastic organic polymer, wherein the organic polymer forms at least a core of each agglomerate and wherein the adsorbent particles of a single agglomerate are each arranged and/or deposited on at least a core of organic polymer, wherein the size ratio of the core of organic polymer to the individual adsorbent particle is at least 1.25:1, and wherein the molded part is obtained by pressing the adsorbent structures based on agglomerates of adsorbent particles, and wherein the pressing is carried out under heating at temperatures below the melting or softening temperature of the organic polymer and with simultaneous molding.

2. Adsorbent molded part according to claim 1,
**characterized in that**
the molding is integrally and/or monolithically formed and/or
that the molded body is formed to be cylindrical, rod-shaped, plate-shaped, cuboid or polyhedral.

3. Adsorbent molded part according to claim 1 or 2,
**characterized in that**
the individual agglomerates each comprise one or a plurality of cores made of organic polymer, in particular, binding agents.

4. Adsorbent molded part according to any one of the preceding claims,
**characterized in that**
the individual agglomerates each comprise at least 5 adsorbent particles, in particular at least 10 adsorbent particles, preferably at least 15 adsorbent particles, more preferably at least 20 adsorbent particles, and/or that the individual agglomerates each comprise up to 50 adsorbent particles, in particular up to 75 adsorbent particles, preferably up to 100 or more adsorbent particles.

5. Adsorbent molded part according to any one of the preceding claims,
**characterized in that**
the individual agglomerates each comprise a weight ratio of adsorbent particle to organic polymer per agglomerate of at least 2:1, in particular at least 3:1, preferably at least 5:1, more preferably at least 7:1, very particularly preferably at least 8:1, and/or that the individual agglomerates each comprise a weight ratio of adsorbent particle to organic polymer per agglomerate in the range of 2:1 to 30:1, in particular 3:1 to 20:1, preferably 4:1 to 15:1, particularly preferably 5:1 to 10:1.

6. Adsorbent molded part according to any one of the preceding claims,
**characterized in that**
the individual agglomerates are self-supporting and/or
the individual agglomerates are particulate in form, in particular wherein the agglomerates have a particle diameter range of 0.01 to 20 mm, in particular 0.05 to 15 mm, preferably 0.1 to 10 mm, particularly preferably 0.2 to 7.5 mm, very particularly preferably 0.5 to 5 mm.

7. Adsorbent molded part according to any one of the preceding claims,
**characterized in that**
the organic polymer is thermoplastically formed and/or
the organic polymer is formed to be sticky when heated and/or
the organic polymer is selected from polymers of the group of polyesters, polyamides, polyethers, polyether esters and/or polyurethanes and mixtures and copolymers, and/or
the organic polymer is a thermoplastic binding agent, in particular a thermoplastic hot melt adhesive, preferably based on polymers from the group of polyesters, polyamides, polyethers, polyether esters and/or polyurethanes and mixtures thereof and copolymers, and/or
the organic polymer, in particular the binding agent, preferably the hot melt adhesive, is firm at 25 °C and atmospheric pressure, and/or
the organic polymer, in particular the binding agent, preferably the hot melt adhesive, has a melting or softening range above 100 °C, preferably above 110 °C, in particular above 120 °C, and/or
the organic polymer, in particular the binding agent, preferably the hot melt adhesive, has a temperature resistance of at least 100 °C, preferably at least 125 °C, in particular at least 150 ° C.

8. Adsorbent molded part according to any one of the preceding claims,
**characterized in that**
the surface of the adsorbent particles of the individual agglomerates are covered and/or coated with an organic polymer to at most 50%, in particular to at most 40%, preferably to at most 30%, most preferably to at most 20%, and/or
the adsorbent particles have a porous structure and/or
the adsorbent particles are spherical.

9. Adsorbent molded part according to any one of the preceding claims,
**characterized in that**
the adsorbent particle diameter is in the range of 0.001 to 3 mm, in particular 0.005 to 2.5 mm, preferably 0.01 to 2 mm, particularly preferably 0.02 to 1.5 mm, very particularly preferably 0.05 to 1 mm, and/or
the adsorbent particles have an average particle diameter (D50) in the range of 0.01 to 2 mm, in particular 0.05 to 1.5 mm, preferably 0.1 to 1 mm.

10. Adsorbent molded part according to any one of the preceding claims,
**characterized in that**
the adsorbent particles are made of a material selected from the group consisting of activated carbon; zeolites; inorganic oxides, in particular silicas, silica gels and aluminas; molecular sieves; mineral granules; clathrates; metal organic frameworks (MOFs), and mixtures thereof, particularly preferably activated carbon, and/or
the adsorbent particles are formed from grain-shaped, in particular spherical, activated carbon and/or
the adsorbent particles have a specific surface area (BET surface area) of at least 500 m²/g, in particular at least 750 m²/g, preferably at least 1000 m²/g, particularly preferably at least 1200 m²/g, and/or
the adsorbent particles have a specific surface area (BET surface area) in the range from 500 to 4.000 m²/g, preferably 750 to 3000 m²/g, more preferably 900 to 2500 m²/g, particularly preferably 950 to 2000 m²/g, and/or
the adsorbent particles, in particular the activated carbon particles, preferably the activated carbon granules or activated carbon spherules, have a burst pressure of at least 5 Newtons, in particular a burst pressure in the range of 5 to 50 Newtons per particle.

11. Method for the preparation of an adsorbent molded part according to the preceding claims,
**characterized in that**
adsorbent structures based on agglomerates of adsorbent particles as defined in any one of the claims 1 to 10, are pressed to an adsorbent molded part, wherein the pressing is carried out under heating at temperatures below the melting or softening temperature of the organic polymer and with simultaneous molding.

12. Method according to claim 11,
the adsorbent structures based on agglomerates of adsorbent particles are prepared through a multi-stage process, wherein
a) first granular, preferably spherical adsorbent particles on the one hand, and particles made of a thermoplastic organic polymer, in particular a binding agent on the other, are brought into contact and mixed,
b) the resulting mixture is subsequently heated to temperatures above the melting or softening temperature of the organic polymer, and
c) finally, the resulting product is cooled to temperatures below the melting or softening temperature of the organic polymer.

13. Use of an adsorbent molded part according to the preceding claims for the adsorption of toxins, pollutants and odors, in particular gas or air streams or liquids, particularly water, or for the purification or treatment of gases, gas flows or gas mixtures, in particular air, or of liquids, especially water.

14. Use of an adsorbent molded part according to the preceding claims for use in adsorption filters or for the production of filters, in particular adsorption filters, or as a sorption heat store for gases, particularly hydrogen.

15. Filter comprising an adsorbent molded part according to any one of the claims 1 to 10.

## Revendications

1. Objet façonné adsorbant, l'objet façonné étant constitué d'un grand nombre de structures adsorbantes à base d'agglomérats de particules adsorbantes, les agglomérats individuels de particules adsorbantes de structures adsorbantes comprenant chacun un grand nombre de particules adsorbantes granulaires, les particules adsorbantes d'un agglomérat individuel étant reliées les unes aux autres par l'intermédiaire d'un polymère organique thermoplastique, le polymère organique formant au moins un noyau de l'agglomérat considéré, et les particules adsorbantes d'un agglomérat individuel étant chacune disposées et/ou appuyées contre au moins un noyau en un polymère organique, le rapport entre la grosseur du noyau en le polymère organique et celui des particules adsorbantes individuelles étant d'au moins 1,25:1, et l'objet façonné pouvant être obtenu par pressage des structures adsorbantes à base d'agglomérats de particules adsorbantes, le pressage étant réalisé par chauffage à des températures inférieures à la température de fusion ou de ramollissement des polymères organiques, avec un façonnage simultané.

2. Objet façonné adsorbant selon la revendication 1, **caractérisé en ce que** l'objet façonné a une structure en une pièce et/ou monolithique, et/ou que l'objet façonné a une constitution cylindrique, en bâtonnet, en disque, parallélépipédique ou polyédrique.

3. Objet façonné adsorbant selon la revendication 1 ou 2, **caractérisé en ce que** chacun des agglomérats individuels comprend un ou plusieurs noyaux en un polymère organique, en particulier un liant.

4. Objet façonné adsorbant selon l'une des revendications précédentes, **caractérisé en ce que** chacun des agglomérats individuels comprend au moins 5 particules adsorbantes, en particulier au moins 10 particules adsorbantes, de préférence au moins 15 particules adsorbantes, d'une manière particulièrement préférée au moins 20 particules adsorbantes, et/ou que chacun des agglomérats individuels comprend jusqu'à 50 particules adsorbantes, en particulier jusqu'à 75 particules adsorbantes, de préférence jusqu'à 100 particules adsorbantes, ou plus.

5. Objet façonné adsorbant selon l'une des revendications précédentes, **caractérisé en ce que** chacun des agglomérats individuels présente un rapport en poids des particules adsorbantes au polymère organique, pour chaque agglomérat, d'au moins 2:1, en particulier d'au moins 3:1, de préférence d'au moins 5:1, d'une manière particulièrement préférée d'au moins 7:1, d'une manière tout particulièrement préférée d'au moins 8:1, et/ou que chacun des agglomérats individuels présente un rapport en poids des particules adsorbantes au polymère organique, pour chaque agglomérat, compris dans la plage de 2:1 à 30:1, en particulier de 3:1 à 20:1, de préférence de 4:1 à 15:1, d'une manière particulièrement préférée de 5:1 à 10:1.

6. Objet façonné adsorbant selon l'une des revendications précédentes, **caractérisé en ce que** les agglomérats individuels sont conçus autoportants, et/ou que les agglomérats individuels ont une structure particulaire, les agglomérats présentant en particulier une granulométrie comprise dans la plage de 0,01 à 20 mm, en particulier de 0,05 à 15 mm, de préférence de 0,1 à 10 mm, d'une manière particulièrement préférée de 0,2 à 7,5 mm, d'une manière tout particulièrement préférée de 0,5 à 5 mm.

7. Objet façonné adsorbant selon l'une des revendications précédentes, **caractérisé en ce que**
le polymère organique a une structure thermoplastique, et/ou
le polymère organique a une structure adhésive à chaud, et/ou le polymère organique est choisi parmi les polymères du groupe des polyesters, des polyamides, des polyéthers, des polyétheresters et/ou des polyuréthannes, ainsi que des mélanges et copolymères de ceux-ci et/ou
le polymère organique est un polymère thermoplastique, en particulier un adhésif fusible thermoplastique, de préférence à base de polymères du groupe des polyesters, des polyamides, des polyuréthannes, des polyétheresters et/ou des polyuréthannes, ainsi que des mélanges et copolymères de ceux-ci,
le polymère organique, en particulier le liant, de préférence l'adhésif fusible, est solide à 25°C et sous la pression atmosphérique, et/ou
le polymère organique, en particulier le liant, de préférence l'adhésif fusible, présente une plage de fusion ou de ramollissement au-delà de 100°C, de préférence au-delà de 110°C, en particulier au-delà de 120°C, et/ou
le polymère organique, en particulier le liant, de préférence l'adhésif fusible, présente une résistance aux hautes températures d'au moins 100°C, en particulier d'au moins 125°C, en particulier d'au moins 150°C.

8. Objet façonné adsorbant selon l'une des revendications précédentes, **caractérisé en ce que**
les particules adsorbantes des agglomérats individuels sont, à raison d'au plus 50 %, en particulier d'au plus 40 %, de préférence d'au plus 30 %, d'une manière tout particulièrement préférée d'au plus 20 % de leur surface, recouvertes et/ou occupées par un polymère organique, et/ou
les particules adsorbantes présentent une structure poreuse, et/ou
les particules adsorbantes ont une forme sphérique.

9. Objet façonné adsorbant selon l'une des revendications précédentes, **caractérisé en ce que**
les particules adsorbantes ont une granulométrie comprise dans la plage de 0,001 à 3 mm, en particulier de 0,005 à 2,5 mm, de préférence de 0,01 à 2 mm, d'une manière particulièrement préférée de 0,02 à 1,5 mm, d'une manière tout particulièrement préférée de 0,05 à 1 mm, et/ou
les particules adsorbantes ont une granulométrie moyenne (D50) comprise dans la plage de 0,01 à 2 mm, en particulier de 0,05 à 1,5 mm, de préférence de 0,1 à 1 mm.

10. Objet façonné adsorbant selon l'une des revendications précédentes, **caractérisé en ce que**
les particules adsorbantes sont constituées d'un matériau qui est choisi dans le groupe du charbon actif ; des zéolithes ; des oxydes inorganiques, en particulier les dioxydes de silicium, les gels de silice et les oxydes d'aluminium ; des tamis moléculaires ; des granulés minéraux ; des clathrates ; des matériaux à réseaux de coordination organométallique (MOF), ainsi que des mélanges de ceux-ci, d'une manière particulièrement préférée le charbon actif, et/ou
le matériau adsorbant est formé de charbon actif granulaire, en particulier sphérique, et/ou
les particules adsorbantes ont une aire spécifique (aire BET) d'au moins 500 m²/g, en particulier d'au moins 750 m²/g, de préférence d'au moins 1 000 m²/g, d'une manière particulièrement préférée d'au moins 1 200 m²/g, et/ou
les particules adsorbantes ont une aire spécifique (aire BET) comprise dans la plage de 500 à 4 000 m²/g, en particulier de 750 à 3 000 m²/g, de préférence de 900 à 2 500 m²/g, d'une manière particulièrement préférée de 950 à 2 000 m²/g, et/ou
les particules adsorbantes, en particulier les particules de charbon actif, de préférence les brins ou perles de charbon actif, présentent une pression d'éclatement d'au moins 5 newtons, en particulier une pression d'éclatement comprise entre 5 newtons et 50 newtons, par particule.

11. Procédé de fabrication d'un objet façonné adsorbant selon les revendications précédentes, **caractérisé en ce que** des structures adsorbantes à base d'agglomérats de particules adsorbantes, telles que définies dans les revendications 1 à 10, sont pressées pour former un objet façonné adsorbant, le pressage étant réalisé par chauffage à des températures inférieures à la température de fusion ou de ramollissement du polymère organique, avec simultanément un façonnage.

12. Procédé selon la revendication 11, **caractérisé en ce que** les structures adsorbantes à base d'agglomérats de particules adsorbantes sont fabriquées par un procédé en plusieurs étapes, par le fait que
a) on met en contact les unes avec les autres, et on mélange, d'abord d'une part des particules adsorbantes granulaires, de préférence sphériques, et d'autre part des particules d'un polymère organique thermoplastique, en particulier un liant,
b) on chauffe ensuite le mélange obtenu à des températures supérieures à la température de fusion ou de ramollissement du polymère organique, et
c) on refroidit enfin le produit obtenu à des températures inférieures à la température de fusion ou de ramollissement du polymère organique.

13. Utilisation d'un objet façonné adsorbant selon les revendications précédentes pour l'adsorption de polluants, de substances polluantes et d'odeurs, en particulier provenant de flux de gaz ou d'air, mais aussi de liquides, en particulier l'eau, ou pour la purification et le traitement de gaz, de courants gazeux ou de mélanges gazeux, en particulier l'air, ou de liquides, en particulier l'eau.

14. Utilisation d'un objet façonné adsorbant selon les revendications précédentes pour une utilisation dans des filtres d'adsorption ou pour la fabrication de filtres, en particulier de filtres d'adsorption, ou en tant qu'accumulateur de sorption pour gaz, en particulier l'hydrogène.

15. Filtre comprenant un objet façonné adsorbant selon l'une des revendications 1 à 10.
